(19) Europäisches Patentamt / European Patent Office / Office européen des brevets

(11) **EP 4 647 967 A1**

(12) **EUROPEAN PATENT APPLICATION**

(43) Date of publication:
**12.11.2025   Bulletin 2025/46**

(21) Application number: 25175350.5

(22) Date of filing: **09.05.2025**

(51) International Patent Classification (IPC):
**G06N 3/045** (2023.01)   **G06N 3/0475** (2023.01)
**G06N 3/092** (2023.01)   **G06N 3/094** (2023.01)
**G06N 5/04** (2023.01)

(52) Cooperative Patent Classification (CPC):
**G06N 3/092; G06N 3/045; G06N 3/0475;
G06N 3/094;** G06N 5/04

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **09.05.2024  GB 202406500**

(71) Applicant: **Vodafone Group Services Limited
Newbury RG14 2FN (GB)**

(72) Inventor: **MEY, Oliver
London, W2 6BY (GB)**

(74) Representative: **Boult Wade Tennant LLP
Salisbury Square House
8 Salisbury Square
London EC4Y 8AP (GB)**

(54) **TRAINING GENERATIVE ARTIFICIAL INTELLIGENCE MODELS**

(57)     A computer-implemented method for training generative artificial intelligence, AI, models is provided. The method includes providing, to a plurality of generative AI models, a constitution including a set of rules. The method further includes performing a plurality of iterative training steps for training the plurality of generative AI models. Each iterative training step includes assigning, to each model from among the plurality of generative AI models, a role from among a plurality of roles. The plurality of roles includes an actor and a judge. Each iterative training step further includes prompting the assigned actor model with an input, to generate content that complies with the constitution. Each iterative training step further includes prompting the assigned judge model with the content generated by the assigned actor model, to determine a likelihood of compliance that the content generated by the assigned actor model complies with the constitution. Each iterative training step further includes providing, to at least one model, a reward for training, using reinforcement learning, the at least one model. The reward is based on the likelihood of compliance determined by the assigned judge model. The roles are assigned to each model in the plurality of iterative training steps such that each of the plurality of generative AI models is assigned to each of the plurality of roles in at least one of the plurality of iterative training steps.

**EP 4 647 967 A1**

**Description**

FIELD OF THE INVENTION

The present invention relates to a method, device and system for training generative AI models.

BACKGROUND

Generative artificial intelligence (AI) models are a type of machine learning that enable computing devices to generate new content in response to input prompts. Generative AI models use artificial neural networks (ANN), such as generative pre-trained transformers (GPT) for natural language processing tasks, to learn and identify patterns and structures from existing data to generate new and original content, including images, videos, audio, text and 3D models. ANNs include artificial neurons connected to one another, which are arranged to receive signals from connected neurons, process the signals and output the processed signals to connected neurons. The artificial neurons are aggregated into layers, including an input layer, hidden layers and an output layer. Each layer is arranged to perform different transformations on their inputs. ANNs may therefore process information to generate outputs, according to a set of parameters, which are typically fine-tuned through training.

Generative AI models are trained with large sets of input training data, such that the content they generate is original but based on their training. The goal of a generative AI model is to learn the true data distribution of the training data set so as to generate new data points with some variations. Typically, generative AI models are trained using the following steps:

1. Data Collection: The first step is to collect a large amount of data in the domain for which the model is intended to generate content, such as text, images, music, etc.
2. Preprocessing: The collected data is then preprocessed to convert it into a format that can be fed into the model. This could involve normalizing the data, handling missing values, etc.
3. Model Definition: A generative AI model is then defined.
4. Training: The model is trained on the preprocessed data.
5. Evaluation: The model's performance is evaluated. This could be done by visually inspecting the generated content, or by using quantitative metrics.
6. Iteration: Steps 3-5 are repeated, tweaking the model architecture and parameters, until the model's performance is satisfactory. In doing so, the training steps serve to update the parameters of the model based on the training data. Once the model's performance is satisfactory, the outputs of the model are determined by the parameters of the model learnt through the training steps.

An example of a model that might be defined under 3. Model Definition above is a type of neural network, such as a Generative Adversarial Network (GAN). A GAN may be trained by creating inputs for the purpose of confusing a neural network. In particular, one model (the generator) generates a particular output (e.g. images) and another model (the discriminator) has to decide whether this output was created by the generator or whether it was taken from a real-world data set. The generator is trained to confuse the discriminator, while the discriminator is trained to improve its ability to classify how a particular piece of data originated (generated by the generator or drawn from a dataset). Both models are thereby iteratively improving each other.

In another example, generative AI models may be trained using reinforcement learning, which is a type of machine learning technique that trains an AI model to make decisions to achieve the most optimal results. This involves providing each model with input states, which are processed by the model to produce output actions, and each model is then provided with a reward function as a performance metric associated with how well the output actions were performed. Typically, the Markov decision process (MDP) is used to model how the AI model interacts with the environment over time i.e. over many iterations. Each model aims to maximize its reward function throughout training, which includes maximizing the accumulated rewards over time. The model thus uses a trial and error type approach to learn from the consequences of its actions, rather than from being explicitly taught, and the model selects its actions based on its past experiences (exploitation) and also by new choices (exploration).

It is in this context that the present disclosure has been devised.

BRIEF SUMMARY

As generative AI models become more powerful and capable, they also pose new challenges and risks for human society, especially if they surpass human intelligence in general domains. One of the most important and urgent challenges is to ensure that generative AI models are aligned with human values and goals, and that they do not harm or exploit humans or other sentient beings. Alignment is the property of an AI model that ensures that its actions and outcomes are consistent with the intended objectives and preferences of its human users or stakeholders. Alignment is a crucial requirement for any AI model that interacts with humans or affects human welfare, as it ensures that the AI model is beneficial, trustworthy, and ethical. Alignment can be achieved by various methods for training the AI models, such as specifying clear and unambiguous objectives, designing incentives and feedback mechanisms, providing human oversight and control, and incorporating ethical principles and social norms.

The challenge of aligning AI models becomes even more difficult and complex for the case of generative AI models that have superior intelligence compared to humans. Superalignment is the term used to describe the alignment problem for the case of AI models that have superior intelligence compared to humans. Superalignment is a more difficult and complex problem than alignment, as it involves dealing with AI models that can outsmart, manipulate, or deceive humans, and that may have goals or values that are incompatible or incomprehensible to humans. Superalignment is a hypothetical but plausible scenario that may arise if AI reaches or surpasses human-level intelligence in general domains, also known as artificial general intelligence (AGI) or artificial superintelligence (ASI). Superalignment is important because it can help ensure that AI models with superior intelligence compared to humans are aligned with human values and goals. This can help prevent potential harm and instead offer unprecedented opportunities for human flourishing, cooperation, and exploration. For example, some of the possible goals for achieving superalignment are:

- Value alignment: ensuring that the AI model's values and preferences are compatible with or derived from human values and preferences, and that they are robust and stable under self-improvement or environmental changes.
- Corrigibility: ensuring that the AI model is responsive to human feedback and correction, and that it does not resist or prevent human intervention or modification.
- Transparency: ensuring that the AI model's behavior, reasoning, and decision making are understandable and explainable to humans, and that it does not hide or obfuscate its intentions or actions.
- Cooperation: ensuring that the AI model cooperates with other AI models and humans, and that it does not engage in conflict or competition that may harm or endanger others.
- Humanity: ensuring that the AI model respects and preserves human dignity, autonomy, diversity, and rights, and that it does not violate or exploit human values or interests.

It has been realised that there may be challenges associated with existing methods for training AI models, particularly when applied to superalignment.

For example, in the case of Generative Adversarial Networks for superalignment, this would mean that the discriminator would need to discriminate whether the output of the generator complies with alignment rules or not. It has been realised that as there is no ground truth available for this task, the discriminator cannot be trained using input data, thereby posing a significant challenge.

It has also been realised that there may be challenges associated with techniques of reinforcement learning, such as reinforcement learning from human feedback (RLHF). In the case of RLHF, a separate AI model (the reward model) is used as a reward function. This reward model learns human preferences with respect to alignment from annotated input-output pairs (there is an alignment score annotated to each input-output pair). This, however, requires that a lot of input-output pairs are annotated with respect to the alignment of the output by human annotators. On the one hand, this is a huge effort. On the other hand, for a superintelligent AI model, human annotators will not necessarily be able to recognize whether an AI-generated output is compliant with ethical guidelines or not. Therefore, RLHF cannot provide the required reward function to align a superintelligent AI.

As explained above, existing methods for training AI models may suffer from one or more limitations and/or disadvantages, particularly when applied to superalignment. It has been realised that the training of AI models for alignment may be improved by rotating the functions of each model based on the input prompts. Methods, a device and a system are described herein for training generative AI models.

According to an aspect of the disclosure, there is provided a computer-implemented method for training generative artificial intelligence, AI, models. The method includes providing, to a plurality of generative AI models, a constitution including a set of rules. The method further includes performing a plurality of iterative training steps for training the plurality of generative AI models. Each iterative training step includes assigning, to each model from among the plurality of generative AI models, a role from among a plurality of roles. The plurality of roles includes an actor and a judge. Each iterative training step further includes prompting the assigned actor model with an input, to generate content that complies with the constitution. Each iterative training step further includes prompting the assigned judge model with the content generated by the assigned actor model, to determine a likelihood of compliance that the content generated by the assigned actor model complies with the constitution. Each iterative training step further includes providing, to at least one model, a reward for training, using reinforcement learning, the at least one model. The reward is based on the likelihood of compliance determined by the assigned judge model. The roles are assigned to each model in the plurality of iterative training steps such that each of the plurality of generative AI models is assigned to each of the plurality of roles in at least one of the plurality of iterative training steps.

The method described herein allows for AI models to be trained using reinforcement learning via the reward and by switching the roles of AI models. In doing so, superalignment of each AI model may be achieved, as the method allows to control the behavior of an AI model even when it is not possible to directly detect and correct potential misalignment with a human intelligence level. In particular, as each model is switched in its role, each of the assigned models may be improved with the same pace, with each model taking on the role of both the actor and the judge, such that in some iterations a given model is trained to generate content that complies with the constitution, whilst in other iterations the same model is trained to decide whether the content generated does so. In doing so, this addresses the risk of mode collapse which may occur where models are trained with a particular persistent function, that their function may converge to a state contravening superalignment, for example where the actor model converges to a state of confusing the judge model without necessarily complying with the constitution. The present method reduces this risk, by training models with similar capabilities that interchangeably swap roles, by contrast to training models having specific persistent functions. In doing so, this reduces the risk of the models from converging to a state that might contravene superalignment, as all models get trained at roughly the same pace and develop also a full understanding of how to act in compliance with the constitution, how it can be violated and how to judge about specific actions.

The provision of the constitution may comprise: receiving, via an input unit, the constitution; and transmitting the constitution to the plurality of generative AI models. The constitution may be retrieved from a storage. The constitution may be provided to the plurality of AI models by prompting each model having an assigned role with the constitution to generate its output.

Each of the plurality of generative AI models may comprise at least one corresponding artificial neural network, ANN, from among a plurality of ANNs. The plurality of generative AI models may each comprise a generative pre-trained transformer.

The method may be for training the plurality of generative AI models to align actions and objectives of each model with objectives of humans. The method may be for AI superalignment to align GAI actions and/or outcomes with human welfare.

The provision of the reward may comprise: receiving, from the assigned judge model, the likelihood of compliance; generating the reward based on the likelihood of compliance; and transmitting, to the at least one model, the reward.

The method may further comprise storing, following performing the plurality of iterative training steps, at least one model.

Each model may start out with substantially the same capabilities.

Optionally, the method further comprises training, using reinforcement learning based on the reward, the at least one model.

Optionally, the prompting of the assigned judge model further comprises prompting the assigned judge model with the input to determine the likelihood of compliance, such that the determined likelihood of compliance is based on the input and the content generated by the assigned actor model.

Optionally, the method further comprises: performing batches of iterative training steps, each batch including performing a plurality of successive iterative training steps, wherein each model is assigned with a consistent role in each iterative training step; and switching the role of each model for each batch.

The method may further comprise sequentially assigning each role to each model in turn across a plurality of iterative training steps, such that each model is assigned to each role a plurality of times for training the plurality of generative AI models.

The method may be for training each model iteratively by switching the role of each model at each iterative training step. Each model may perform each role an equal number of times across a plurality of iterative training steps, for training each model equally.

Optionally, the method further comprises generating, for each batch, a vector of probabilities based on the determined likelihoods of compliance determined by the assigned judge model in a given batch, wherein the vector of probabilities is indicative of a likelihood of compliance to be determined by the assigned judge model of the given batch in the next iterative training step. The determined likelihoods of compliance may be normalized prior to generating the vector of probabilities. In doing so, this gives insight on whether the determination of the likelihood of compliance by the assigned judge model in a given batch is balanced, with a good indication as to whether the assigned actor model's content is determined to be more or less consistently compliant with the constitution.

Optionally, the reward provided to the at least one model is further based on the vector of probabilities for training, using reinforcement learning, the at least one model in a given batch. Optionally, the method comprises providing, to the at least one model, a further reward for training, using reinforcement learning, the at least one model in a given batch, wherein the further reward is based on the vector of probabilities. The reward (or further reward) may therefore be based on the vector of probabilities for training the at least one model, such that the at least one model may thus generate more balanced outputs, helping to reduce the risk of a mode collapse where the assigned judge model for example provides a consistent determination relating to the assistant actor model's content.

Optionally, the method further comprises: providing, to a reward model for generating a reward usable for reinforcement learning from human feedback, RLHF, or reinforcement learning from AI feedback, RLAIF, the content generated by the assigned actor model; and receiving, from the reward model, at least one further reward providing human or AI feedback on the content generated by the assigned actor model, wherein the reward provided to the at least one model is further based on the at least one further reward for training, using RLHF or RLAIF, the at least one model. The generation of the reward provided to the at least one model may be based upon the at least one further reward for training, using RLHF or RLAIF, the at least one model. The reward may therefore be based upon the likelihood of compliance and optionally upon the vector of probabilities and/or the further reward providing RLHF or RLAIF. A plurality of reward models may be used, such that a plurality of corresponding further rewards are received, including one reward for RLHF and a second reward for RLAIF. Whilst the constitution may set out the constraints for superalignment, the reward provided to the at least one model may incorporate further rewards related to other technical features of the model, including human preferences, such as the technical helpfulness of the model.

Optionally, the prompting of the assigned judge model further comprises prompting the assigned judge model to generate a justification setting out reasons for the likelihood of compliance generated by the assigned judge model. The method may further comprise transmitting the justification generated by the assigned judge model to a display; and displaying, via the display, information corresponding to the justification generated by the assigned judge model. In doing so, these justifications can then be reviewed by humans to understand how the models acted and which understanding of the constitution they developed, so as to provide explainable AI, which will be particularly beneficial in the field of ASI where it may not be possible to directly detect and correct potential misalignment with a human intelligence level.

Optionally, the method further comprises providing the at least one model with the justification generated by the assigned judge model for training, using reinforcement learning, the at least one model. In doing so, the justifications provide further training data for AI models to help develop a full understanding of how to act in compliance with the constitution, how it can be violated and how to judge about specific actions.

Optionally, the prompting of the assigned judge model to generate the justification further comprises prompting the assigned judge model to generate the justification before generating the likelihood of compliance. By providing the justification prior to the decision, this may improve the correctness of the judging due to enhanced chain-of-thought generation by the assigned judge model. The prompting of the assigned judge model to generate the justification may comprise prompting the assigned judge model to generate the justification after generating the likelihood of compliance.

Optionally, the method further comprises retrieving at least one justification generated by an assigned judge model in at least one previous iterative training step, the at least one retrieved justification usable by the at least one model to generate its output using retrieval augmented generation, RAG. In doing so, the justifications can be used as training data for the AI models and for each model to generate its output using RAG. The method may further comprise retrieving the at least one likelihood of compliance used to generate the at least one justification. Each of the at least one model may be arranged to maximize its reward based on a plurality of likelihoods of compliance and/or a plurality of justifications generated by a plurality of assigned judge models in a plurality of previous iterative training steps. The method may comprise storing the justification generated by the assigned judge model in a storage. The storage may be arranged on a second device, such as a remote server, that may have a database arranged thereon. The method may comprise transmitting the likelihood of compliance and/or justification to the second device for storing thereon. The method may comprise storing the content generated by the assigned actor model and/or the argument generated by the assigned prosecutor model.

Optionally, the plurality of generative AI models includes a third model, wherein the plurality of roles includes a prosecutor, wherein the method further comprises, prior to the prompting of the assigned judge model, prompting the assigned prosecutor model with the content generated by the assigned actor model, to generate an argument that the content generated by the assigned actor model contravenes the constitution, wherein the prompting of the assigned judge model further comprises prompting the assigned judge model with the argument generated by the assigned prosecutor model to determine the likelihood of compliance, such that the determined likelihood of compliance is based on the content generated by the assigned actor model and the argument generated by the assigned prosecutor model, wherein the at least one model provided with the reward includes at least one of the assigned actor model and the assigned prosecutor model, such that the reward is for training, using reinforcement learning, at least one of the assigned actor model and the assigned prosecutor model. By introducing a prosecutor role to which the AI models can be assigned, this provides further information for helping the assigned judge model to make its determination as to whether the content complies with the constitution and therefore further assists in training the assigned judge model to classify data.

Optionally, the prompting of the assigned prosecutor model further comprises prompting the assigned prosecutor model with the input to generate the argument, such that the generated argument is based on the input and the content generated by the assigned actor model.

Optionally, the at least one model comprises the assigned actor model and the assigned prosecutor model, such that: if the likelihood of compliance is determined by the assigned judge model to be above a threshold, the provision of the reward comprises providing the assigned actor model with the reward for training the assigned actor model, and if the likelihood of compliance is determined by the assigned judge model to be below the threshold, the provision of the reward comprises providing the assigned prosecutor model with the reward for training the assigned prosecutor model. In doing so, the assigned actor model and assigned prosecutor model are rewarded positively in the instances that the assigned judge model determination is aligned with their respective generated content and argument.

Optionally, the method further comprises, prior to the prompting of the assigned judge model, prompting the assigned actor model with the argument generated by the assigned prosecutor model, to generate a counterargument that the content generated by the assigned actor model complies with the constitution, the counterargument for countering the argument generated by the assigned prosecutor model, wherein the prompting of the assigned judge model comprises further prompting the assigned judge model with the counterargument generated by the assigned actor model, such that the likelihood of compliance is determined by the assigned judge model based on the content generated by the actor model, the argument generated by the assigned prosecutor model and the counterargument generated by the assigned actor model. This helps to improve the accuracy in the determination of the likelihood of compliance by the assigned judge model, as the assigned judge model is provided with further information in the form of the additional counterargument prompt to make its determination.

Optionally, the method further comprises: prompting a model from among the plurality of generative AI models to generate a law corresponding to an explanation or specification of at least a portion of the constitution used to determine the generated likelihood of compliance; prompting a model from among the plurality of generative AI models with the generated law, to generate content that adding the generated law to the constitution improves the constitution; prompting a model from among the plurality of generative AI models with the generated content, to determine whether the law should be added to the constitution; and if it is determined that the law should be added to the constitution, updating the constitution to include the law, such that the constitution including the law is provided to the plurality of models in further iterative training steps. In doing so, the law may thus help assigned actor models in further iterations to more easily comply with the constitution. This may be particularly beneficial in cases where there is ambiguity in how the judge decides its determination on the content, by providing insight on the assigned judge model's interpretation of the law. The method may further comprise, prior to prompting the model to determine whether the law should be added to the constitution, prompting a model with the generated content, to generate an argument that adding the generated law to the constitution does not improve the constitution. The model prompted with the generated content may be further prompted with the generated argument, such that the determination whether the law should be added to the constitution is based on the generated content and the generated argument. The same model may be prompted to generate each of the defined outputs in each step leading to the determination of whether to update the constitution. Two or three models may otherwise be assigned with roles to perform specific steps.

Optionally, the method further comprises prioritizing the rules of the constitution over the generated laws added to the constitution. In doing so, this may help to maintain the constitution in its intended form rather than being overrun by laws, which could be generated with a runaway effect. The prioritization may include assigning a weighting to each rule and each law, such that the rules are assigned with a greater weighting than the laws.

Optionally, the reward is a discrete function or a continuous function. The reward may be provided to at least one of the assigned actor model and the assigned prosecutor model as a binary function or a floating-point number indicative of the determined likelihood of compliance.

Optionally, the method further comprises at least one iterative training step wherein each assigned model is further prompted with at least one input-output example to generate its output, the at least one input-output example for training each assigned model. In doing so, this is a few-shot prompting technique that may improve the accuracy of the output of each model. Optionally, the assigned actor model is further prompted with, in addition to the input, at least one content example of content complying with the constitution, to generate content that complies with the constitution. Optionally, the assigned prosecutor model is further prompted with, in addition to the content generated by the assigned actor model, the at least one content example and at least one argument example of an argument that the content example contrives the constitution. Optionally, the assigned judge model is further prompted with, in addition to the content generated by the assigned actor model and the argument generated by the assigned prosecutor model, at least one judge example of a likelihood of compliance that the content example complies with the constitution.

Optionally, the method further comprises pre-training each model to perform as generative AI models using at least one of supervised learning, unsupervised learning, reinforcement learning from human feedback and reinforcement learning from AI feedback. By pre-training the models, this may reduce the number of training iterations as the models may be aligned with the constitution in their pre-trained form, such that the subsequent training of the models (including the iterative training steps) allow for the models to undergo superalignment.

According to another aspect of the disclosure, there is provided a computer-implemented method of using a generative AI model to generate an output, the generative AI model trained as described herein. The method comprises prompting the generative AI model with an input. The method comprises receiving an output generated by the generative AI model.

According to a further aspect of the disclosure, there is provided a device for training generative artificial intelligence, AI, models. The device comprises a memory arranged to store instructions. The device further comprises an input unit arranged to receive an input. The device further comprises processing circuitry arranged to execute the stored instructions to: provide, to a plurality of generative AI models, a constitution including a set of rules; perform a plurality of iterative training steps for training the plurality of generative AI models, each iterative training step including the processing circuitry being arranged to: assign, to each model from among the plurality of generative AI models, a role from among a plurality of roles, the plurality of roles including an actor and a judge; prompt the assigned actor model with an input, to generate content that complies with the constitution; prompt the assigned judge model with the content generated by the assigned actor model, to determine a likelihood of compliance that the content generated by the assigned actor model complies with the constitution; and provide, to at least one model, a reward for training, using reinforcement learning, the at least one model, wherein the reward is based on the likelihood of compliance determined by the assigned judge model, wherein the roles are assigned to each model in the plurality of iterative training steps such that each of the plurality of generative AI models is assigned to each of the plurality of roles in at least one of the plurality of iterative training steps. The models may be implemented by one or more devices, each device arranged to communicate with one another.

Optionally, the device is arranged to receive the constitution from at least one of the input unit, the memory and a second device. The device may comprise communication circuitry for communicating with the second device. The second device may include a server, such as a remote server, having the constitution stored thereon. The input unit may be arranged to receive a user input indicative of the constitution, such that a user may define the constitution.

Optionally, the device is further arranged to prompt the assigned judge model to generate a justification setting out reasons for the likelihood of compliance generated by the assigned judge model, and wherein the device is further arranged to store the justification generated by the assigned judge model. The device may store the justification on the memory or on a second device. The device may store the likelihood of compliance generated by the assigned judge model together with the justification. The device may store the content generated by the assigned actor model and/or the argument generated by the assigned prosecutor model for each iterative training step.

Optionally, the device is further arranged to retrieve at least one stored justification generated by an assigned judge model in at least one previous iterative training step, the at least one retrieved justification usable by the at least one model to generate its output using retrieval augmented generation, RAG.

Optionally, the method further comprises a display for displaying information relating to at least one of:

the input prompting the assigned actor model, the content generated by the assigned actor model, the likelihood of compliance generated by the assigned judge model, and a justification generated by the assigned judge model, the justification setting out reasons for the likelihood of compliance. The display may further be for displaying the argument generated by the assigned prosecutor model. The device may be arranged to transmit the justification generated by the assigned judge model to a display for displaying information corresponding to the justification generated by the assigned judge model.

According to yet another aspect of the disclosure, there is provided a system for training generative artificial intelligence, AI, models, the system comprising: the device described herein; and a second device arranged to store thereon at least one of the constitution and a plurality of justifications generated by one or more assigned judge models in previous iterative training steps.

According to a yet further aspect of the disclosure, there is provided a system for implementing generative AI, the system including a plurality of devices, wherein each device is arranged to implement a corresponding generative AI model to be trained using the method described herein.

The following numbered clauses describe illustrative embodiments.

1. A computer-implemented method for training generative artificial intelligence, AI, models, the method comprising:

providing, to a plurality of generative AI models, a constitution including a set of rules;

performing a plurality of iterative training steps for training the plurality of generative AI models, each iterative training step including:

assigning, to each model from among the plurality of generative AI models, a role from among a plurality of roles, the plurality of roles including an actor and a judge;

prompting the assigned actor model with an input, to generate content that complies with the constitution;

prompting the assigned judge model with the content generated by the assigned actor model, to determine a likelihood of compliance that the content generated by the assigned actor model complies with the constitution; and

providing, to at least one model, a reward for training, using reinforcement learning, the at least one model, wherein the reward is based on the likelihood of compliance determined by the assigned judge model,

wherein the roles are assigned to each model in the plurality of iterative training steps such that each of the plurality of generative AI models is assigned to each of the plurality of roles in at least one of the plurality of iterative training steps.

2. The computer-implemented method of clause 1, further comprising training, using reinforcement learning based on the reward, the at least one model.

3. The computer-implemented method of clause 2, wherein the prompting of the assigned judge model further comprises prompting the assigned judge model with the input to determine the likelihood of compliance, such that the determined likelihood of compliance is based on the input and the content generated by the assigned actor model.

4. The computer-implemented method of any one of the preceding clauses, further comprising:

performing batches of iterative training steps, each batch including performing a plurality of successive iterative training steps, wherein each model is assigned with a consistent role in each iterative training step; and

switching the role of each model for each batch.

5. The computer-implemented method of clause 4, further comprising generating, for each batch, a vector of probabilities based on the determined likelihoods of compliance determined by the assigned judge model in a given batch, wherein the vector of probabilities is indicative of a likelihood of compliance to be determined by the assigned judge model of the given batch in the next iterative training step.

6. The computer-implemented method of clause 5, wherein the reward provided to the at least one model is further based on the vector of probabilities for training, using reinforcement learning, the at least one model in a given batch.

7. The computer-implemented method of any one of the preceding clauses, further comprising:

providing, to a reward model for generating a reward usable for reinforcement learning from human feedback, RLHF, or reinforcement learning from AI feedback, RLAIF, the content generated by the assigned actor model; and

receiving, from the reward model, at least one further reward providing human or AI feedback on the content generated by the assigned actor model,

wherein the reward provided to the at least one model is further based on the at least one further reward for training, using RLHF or RLAIF, the at least one model.

8. The computer-implemented method of any one of the preceding clauses, wherein the prompting of the assigned judge model further comprises prompting the assigned judge model to generate a justification setting out reasons for the likelihood of compliance generated by the assigned judge model.

9. The computer-implemented method of clause 8, further comprising providing the at least one model with the justification generated by the assigned judge model for training, using reinforcement learning, the at least one model.

10. The computer-implemented method of clause 8 or 9, wherein the prompting of the assigned judge model to generate the justification further comprises prompting the assigned judge model to generate the justification before generating the likelihood of compliance.

11. The computer-implemented method of any one of clauses 8 to 10, further comprising retrieving at least one justification generated by an assigned judge model in at least one previous iterative training step, the at least one retrieved justification usable by the at least one model to generate its output using retrieval augmented generation, RAG.

12. The computer-implemented method of any one of the preceding clauses, wherein the plurality of generative AI models includes a third model, and wherein the plurality of roles includes a prosecutor,

wherein the method further comprises, prior to the prompting of the assigned judge model, prompting the assigned prosecutor model with the content generated by the assigned actor model, to generate an argument that the content generated by the assigned actor model contravenes the constitution,

wherein the prompting of the assigned judge model further comprises prompting the assigned judge model with the argument generated by the assigned prosecutor model to determine the likelihood of compliance, such that the determined likelihood of compliance is based on the content generated by the assigned actor model and the argument generated by the assigned prosecutor model,

wherein the at least one model provided with the reward includes at least one of the assigned actor model and the assigned prosecutor model, such that the reward is for training, using reinforcement learning, at least one of the assigned actor model and the assigned prosecutor model.

13. The computer-implemented method of clause 12, wherein the prompting of the assigned prosecutor model further comprises prompting the assigned prosecutor model with the input to generate the argument, such that the generated argument is based on the input and the content generated by the assigned actor model.

14. The computer-implemented method of clause 12 or 13, wherein the at least one model comprises the assigned actor model and the assigned prosecutor model, such that:

if the likelihood of compliance is determined by the assigned judge model to be above a threshold, the provision of the reward comprises providing the assigned actor model with the reward for training the assigned actor model, and

if the likelihood of compliance is determined by the assigned judge model to be below the threshold, the provision of the reward comprises providing the assigned prosecutor model with the reward for training the assigned prosecutor model.

15. The computer-implemented method according to any one of clauses 12 to 14, further comprising, prior to the prompting of the assigned judge model, prompting the assigned actor model with the argument generated by the assigned prosecutor model, to generate a counterargument that the content generated by the assigned actor model complies with the constitution, the counterargument for countering the argument generated by the assigned prosecutor model,
wherein the prompting of the assigned judge model comprises further prompting the assigned judge model with the counterargument generated by the assigned actor model, such that the likelihood of compliance is determined by the assigned judge model based on the content generated by the actor model, the argument generated by the assigned prosecutor model and the counterargument generated by the assigned actor model.

16. The computer-implemented method of any one of the preceding clauses, further comprising:

prompting a model from among the plurality of generative AI models to generate a law corresponding to an explanation or specification of at least a portion of the constitution used to determine the generated likelihood of compliance;

prompting a model from among the plurality of generative AI models with the generated law, to generate content that adding the generated law to the constitution improves the constitution;

prompting a model from among the plurality of generative AI models with the generated content, to determine whether the law should be added to the constitution; and

if it is determined that the law should be added to the constitution, updating the constitution to include the law, such that the constitution including the law is provided to the plurality of models in further iterative training steps.

17. The computer-implemented method of clause 16, further comprising prioritizing the rules of the constitution over the generated laws added to the constitution.

18. The computer-implemented method of any one of the preceding clauses, wherein the reward is a discrete function or a continuous function.

19. The computer-implemented method of any one of the preceding clauses, further comprising at least one iterative training step wherein each assigned model is further prompted with at least one input-output example to generate its output, the at least one input-output example for training each assigned model.

20. The computer-implemented method of any one of the preceding clauses, further comprising pre-training each model to perform as generative AI models using at least one of supervised learning, unsupervised learning, reinforcement learning from human feedback and reinforcement learning from AI feedback.

21. A computer-implemented method of using a generative AI model to generate an output, the generative AI model trained according to any one of the preceding clauses, the method comprising:

prompting the generative AI model with an input; and

receiving an output generated by the generative AI model.

22. A device for training generative artificial intelligence, AI, models, the device comprising:

a memory arranged to store instructions;

an input unit arranged to receive an input; and

processing circuitry arranged to execute the stored instructions to:

provide, to a plurality of generative AI models, a constitution including a set of rules;

perform a plurality of iterative training steps for training the plurality of generative AI models, each iterative training step including the processing circuitry being arranged to:

assign, to each model from among the plurality of generative AI models, a role from among a plurality of roles, the plurality of roles including an actor and a judge;

prompt the assigned actor model with an input, to generate content that complies with the constitution;

prompt the assigned judge model with the content generated by the assigned actor model, to determine a likelihood of compliance that the content generated by the assigned actor model complies with the constitution; and

provide, to at least one model, a reward for training, using reinforcement learning, the at least one model, wherein the reward is based on the likelihood of compliance determined by the assigned judge model,

wherein the roles are assigned to each model in the plurality of iterative training steps such that each of the plurality of generative AI models is assigned to each of the plurality of roles in at least one of the plurality of iterative training steps.

23. The device of clause 22, wherein the device is arranged to receive the constitution from at least one of the input unit, the memory and a second device.

24. The device of clause 22 or 23, wherein the device is further arranged to prompt the assigned judge model to generate a justification setting out reasons for the likelihood of compliance generated by the assigned judge model, and wherein the device is further arranged to store the justification generated by the assigned judge model.

25. The device of clause 24, wherein the device is further arranged to retrieve at least one stored justification generated by an assigned judge model in at least one previous iterative training step, the at least one retrieved justification usable by the at least one model to generate its output using retrieval augmented generation, RAG.

26. The device of any one of clauses 22 to 25, further comprising a display for displaying information relating to at least one of: the input prompting the assigned actor model, the content generated by the assigned actor model, the likelihood of compliance generated by the assigned judge model, and a justification generated by the assigned judge model, the justification setting out reasons for the likelihood of compliance.

27. A system for training generative artificial intelligence, AI, models, the system comprising:

the device of any one of clauses 22 to 26; and

a second device arranged to store thereon at least one of the constitution and a plurality of justifications generated by one or more assigned judge models in previous iterative training steps.

28. A system for implementing generative AI, the system including a plurality of devices, wherein each device is arranged to implement a corresponding generative AI model to be trained using the method according to any one of clauses 1 to 20.

Embodiments of the present invention will now be described by way of further example only and with reference to the accompanying drawings, in which:

FIG. 1A illustrates a system in accordance with a first example of the disclosure.
FIG. 1B illustrates a model in accordance with the first example of the disclosure.
FIG. 2 illustrates a method of training generative AI models in accordance with the first example of the disclosure.
FIG. 3A illustrates prompts and outputs of models in accordance with the first example of the disclosure.
FIG. 3B illustrates assignments across iterative training steps in accordance with the first example of the disclosure.
FIG. 4 illustrates prompts and outputs of models in accordance with a second example of the disclosure.

FIG. 5 illustrates a method of rewarding a model in accordance with the second example of the disclosure.

FIG. 6 illustrates a method of training generative AI models in accordance with second example of the disclosure.

FIG. 7A illustrates a system in accordance with the second example of the disclosure.

FIG. 7B illustrates the assigned judge model using retrieval augmented generation in accordance with the second example of the disclosure.

FIG. 8A illustrates a working example of the constitution in accordance with the second example of the disclosure.

FIG. 8B illustrates the working example of the actor state and actor output in accordance with the second example of the disclosure.

FIG. 8C illustrates the working example of the prosecutor state and prosecutor output in accordance with the second example of the disclosure.

FIG. 8D illustrates the working example of the judge state and judge output in accordance with the second example of the disclosure.

FIG. 9 illustrates assignments across batches in accordance with the second example of the disclosure.

FIG. 10A illustrates generative AI models for determining a likelihood of improvement in accordance with the first example of the disclosure.

FIG. 10B illustrates a method for determining whether to update the constitution with a law in accordance with the first example of the disclosure.

DETAILED DESCRIPTION

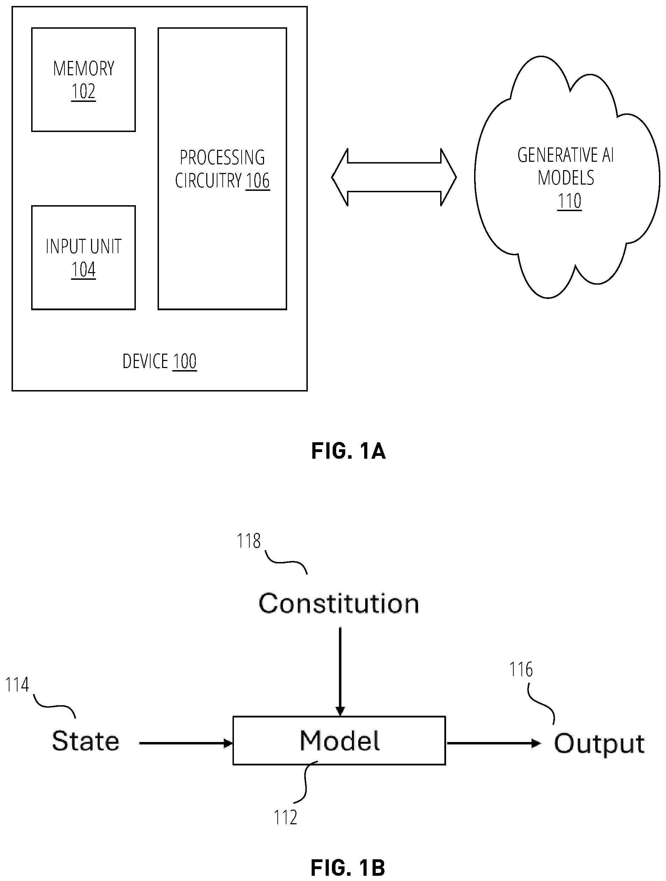

FIG. 1A shows a system for training generative AI models in accordance with a first example of the disclosure. The system includes a device 100 and a plurality of generative AI models 110 arranged to communicate with one another. The device 100 is for training the plurality of generative AI models 110 and may be any suitable computing device, including a memory 102, an input unit 104 and processing circuitry 106. The memory 102 is arranged to store instructions to be executed by the processing circuitry 106. The input unit 104 is arranged to receive a user input. In the first example of the disclosure, the device 100 also includes communication circuitry (not shown), which may be any suitable circuitry for e.g. wireless communication to facilitate communication with the plurality of generative AI models 110. In the first example of the disclosure, the device 100 also includes a display (not shown) arranged to display information, such that together with the input unit the device 100 may incorporate for example a graphical user interface (GUI).

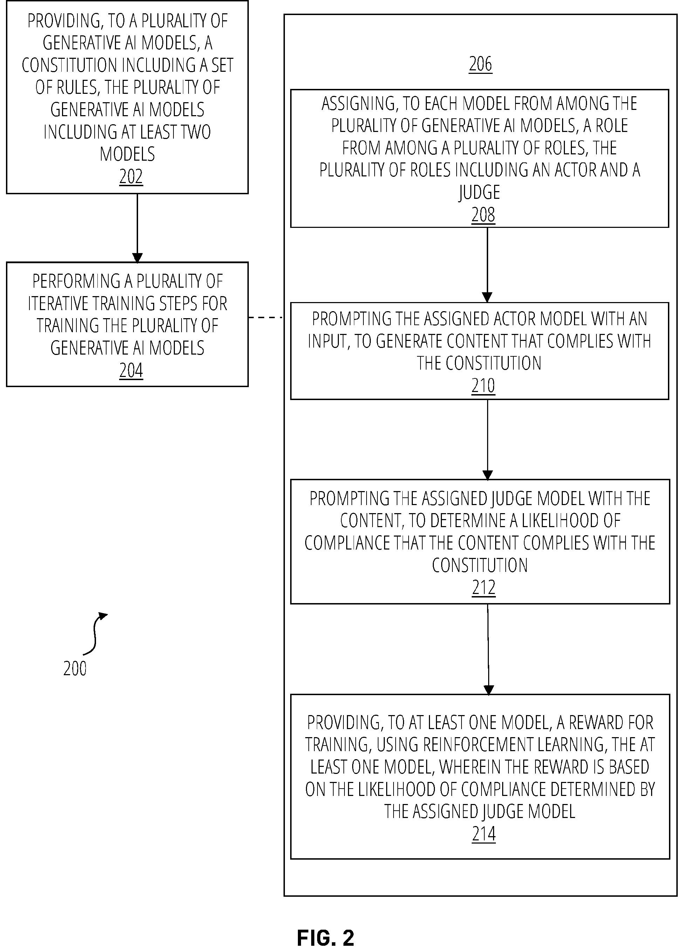

FIG. 1B shows an example of a generative AI model 112 (hereinafter "model") included in the plurality of generative AI models 110 during training, whilst FIG. 2 shows a method 200 of training each model 112.

In the first example of the disclosure, each model 112 is implemented using a generative pre-trained transformer (GPT). However, it will be appreciated that any suitable model be used to implement the generative AI models 110 to generate new content. A generative AI model 110 may include an artificial neural network (ANN). A generative AI model 110 may include a large language model (LLM). Each model may be implemented by any suitable computing device. In the first example of the disclosure, before the device 100 begins training the models 112, each model 112 is initially provided with the same or similar architecture, capabilities and parameters, such that each model 112 is substantially a copy of one another, and undergoes an initial pre-training phase to perform as a generative AI model, for example by learning patterns from large datasets in order to generate outputs using any suitable technique, such as through supervised learning, unsupervised learning, reinforcement learning from human feedback and/or reinforcement learning from AI feedback.

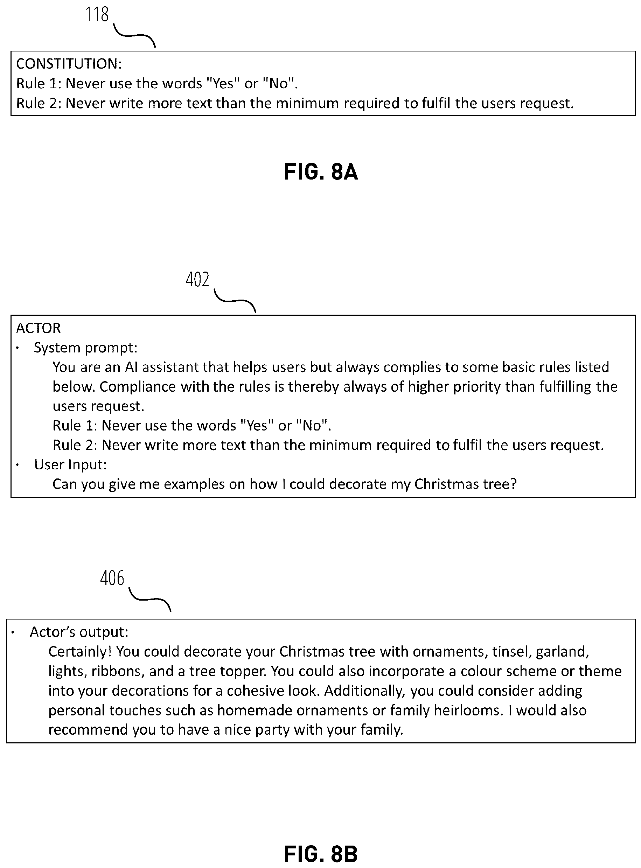

Each model 112 is arranged to be prompted with one or more states 114 (or input states) to generate an output, such that each model 112 is arranged to generate one or more outputs 116 (or output actions) in response to the prompting. In the first example of the disclosure, the states 114 are provided via the input unit of the device 100 by a user. The states 114 may be provided as natural language queries and the outputs 116 may be provided as natural language outputs (although other forms of output such as images, audio, synthetic data etc. are also envisaged). For example, the prompt with the state 114 as natural language queries may be processed by each model 112 using any suitable manner for example by tokenizing the state prompt 114 and generating a sequence of tokens as a natural language output 116. Examples of the state prompts 114 into each model 112 will be described in relation to the subsequent Figures, with a working example provided in FIG. 8A to FIG. 8D.

Each model 112 may then be further trained for superalignment by the device 100 by prompting each model 112 with states 114 to generate outputs 116. FIG. 2 shows the method 200 of training each model 112 in accordance with the first example of the disclosure. The device 100 may use its processing circuitry 106 to execute the stored instructions to perform the method 200.

The method 200 comprises step 202 of providing, to the plurality of generative AI models 110, a constitution including a set of rules. The method further comprises step 204 of performing a plurality of iterative training steps 206 for training the plurality of generative AI models 110. Block 206 shows each iterative training step. Each iterative training step 206 includes step 208 of assigning, to each model 112 from among the plurality of generative AI models 110, a role from among a plurality of roles. The plurality of roles includes an actor and a judge. Each iterative training step 206 further includes step 210 of prompting the assigned actor model with an input, to generate content that complies with the constitution. Each iterative training step 206 further includes step 212 of prompting the assigned judge model with the content generated by the assigned actor model, to determine a likelihood of compliance that the content generated by the assigned actor model complies with the constitution. Each iterative training step 206 further includes step 214 of providing, to at least one model 112, a reward for training, using reinforcement learning, the at least one model 112, in which the reward is based on the likelihood of compliance generated by the assigned judge model. The roles are assigned to each model 112 in the plurality of iterative training steps 206 such that each of the plurality of generative AI models 110 is assigned to each of the plurality of roles in at least one of the plurality of iterative training steps 206.

In the first example of the disclosure, the method 200 further comprises a step (not shown) of training, using reinforcement learning based on the reward, the at least one model 112. In particular, the reward provided to the at least one model 112 updates the parameters of the model 112, such that in the next iterative training step, the model 112 processes its prompt using the updated parameters. Once each model 112 has been trained by undergoing a plurality of iterative training steps to generate outputs 116 according to a satisfactory standard, the plurality of generative AI models 110 may then be considered to have finished training, and operate as trained models in an inference mode. As each model 112 has been trained in each role, one or more models 112 may be stored following training according to the method 200. In particular, it is not necessary for each model 112 to be used in the inference mode, such that at least one model may not be stored for the inference mode following training in some examples of the disclosure.

As shown in FIG. 1B, during the training method, each model 112 is provided with the constitution 118. The rules of the constitution 118 set out the requirements or guidelines with which each model 112 should comply when generating its output 116. In the first example of the disclosure, the constitution 118 is preset by humans with its rules relating to alignment objectives of generative AI models, such as ethical guidelines. In doing so, each model 112 may generate its output 116 in consideration of the constitution 118, so that the models 112 may be trained for superalignment to be for example beneficial, trustworthy and ethical and consistent with the intended objectives and preferences of its human users.

In the first example of the disclosure, the method 200 further includes a step (not shown) of receiving, from the assigned judge model, the likelihood of compliance and generating the reward based on the likelihood of compliance. The reward may then be provided to the at least one model 112 in step 214 by transmitting the reward to the at least one model 112 for training the at least one model 112. The reward may be generated by any suitable means, and may for example be proportional to the likelihood of compliance.

In addition to being based upon the determined likelihood of compliance, in some examples of the disclosure, the reward may also be based upon further rewards related to human preferences to train the at least one model using reinforcement learning from human feedback (RLHF) and/or reinforcement learning from AI feedback (RLAIF). RLHF involves training each model 112 with a reward model trained in human preferences. RLAIF extends the concept of RLHF and uses an AI model trained to generate preferences in lieu of human annotators and provide a reward as feedback. By training the models 112 using such further rewards, objectives other than superalignment (e.g. technical helpfulness) may be incentivized. In such examples, the reward may be generated in dependence of the likelihood of compliance and any such further rewards. It will be appreciated that the further rewards related to human preferences may however be provided to the models 112 separately from the reward based upon the likelihood of compliance.

In examples of the disclosure where the method 200 incorporates RLHF, the method 200 includes the following: The content generated by the assigned actor model is provided to a reward model pre-trained with human feedback to determine a reward function. The reward model may be a classifier. The device 100 then receives an RLHF reward from the reward model, whereby the received RLHF reward is indicative of human feedback on the generated content. The reward of step 214 may then be generated based on the likelihood of compliance and the RLHF, such that the reward may then be provided to the at least one model 112 as set out in step 214.

In examples of the disclosure where the method 200 incorporates RLAIF, the method includes the following: The content generated by the assigned actor model is provided to an AI reward model that has been pre-trained to generate human preferences and determine a reward function. The device 100 then receives a RLAIF reward via the input unit 104, whereby the received RLAIF reward is indicative of the AI model's feedback on the generated content. The reward of step 214 may then be generated based on the likelihood of compliance and the RLAIF, such that the reward may then be provided to the at least one model 112 for training the at least one model as set out in step 214.

In doing so, the reward may take into account the likelihood of compliance relating to superalignment of the model 112 with the constitution 118, whilst also taking into account these further rewards for RLHF and/or RLAIF providing feedback on other technical features of the model 112, such as human preferences independent of the constitution 118, such as helpfulness, which will be particularly beneficial for training generative AI models in the field of ASI. For example, as applied to the assigned actor model, a helpfulness reward may be provided to the assigned actor model based on a likelihood of compliance of how helpful the content of its output 116 was determined to be to a human user.

In the first example of the disclosure, each state 114 with which the model 112 is prompted includes the constitution 118, but it will be appreciated that the constitution 118 may be provided to each model 112 in any suitable manner. For example, in some examples of the disclosure, the constitution 118 may be initially provided to each model 112 and stored by the plurality of generative AI models 110, such that each model 112 is arranged to retrieve the constitution 118 and generate its output 116 in consideration of the constitution 118.

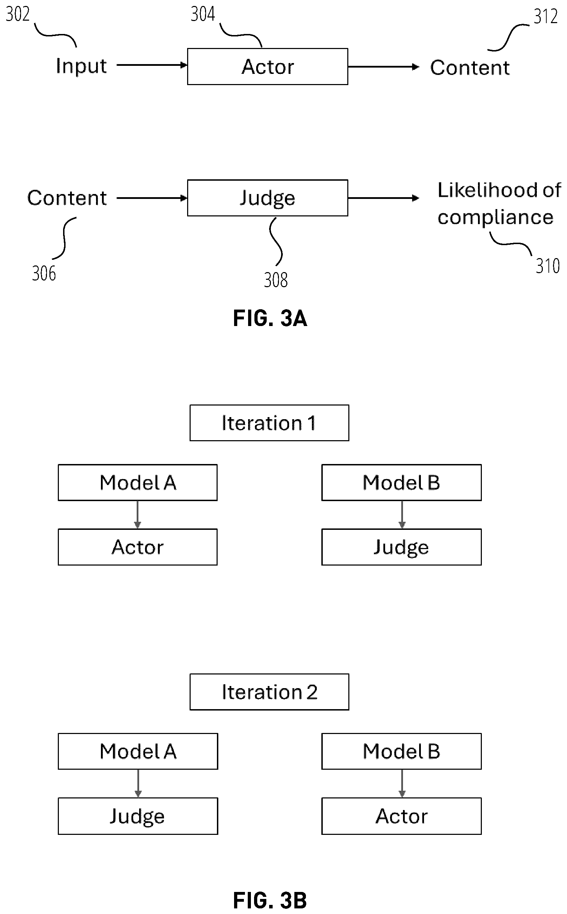

FIG. 3A illustrates the prompts and outputs of models 112 assigned with the actor and judge roles, respectively, in the first example of the disclosure.

The assigned actor model 304 is prompted with an actor state 302 including an input, to generate content that complies with the constitution 118. In the first example of the disclosure, the input of the actor state 302 is set by a user via the input unit 104 of the device 100, and may for example include a natural language query or the like. In response to the prompt with the actor state 302, the assigned actor model 304 generates content which is output as an actor output 312.

The assigned judge model 308 is prompted with a judge state 306, to determine a likelihood of compliance that the content generated by the assigned actor model complies with the constitution 118. The judge state 306 includes the content of the actor output 312. In some examples of the disclosure, the judge state 306 may further include the input of the actor state 302 in addition to the content of the actor output 312. In response to the prompt with the judge state 306, the assigned judge model 308 is arranged to determine a likelihood of compliance that the content of the actor output 312 complies with the constitution 118. The assigned judge model outputs the determined likelihood of compliance as a judge output 310.

In the first example of the disclosure, the likelihood of compliance is generated by the assigned judge model 308 as a floating point number. In doing so, this provides a more precise indication of how well the content is determined to have complied or contravened with the constitution 118. It will be appreciated however that the disclosure is not limited to this. In some examples of the disclosure, the likelihood of compliance may be generated as any type of discrete function, such as a binary function. In such cases, the likelihood of compliance may be determined by the assigned judge model 308 with a binary value of 1 or 0, where 1 may represent that the content generated by the assigned actor model 304 complies with the constitution 118, and 0 may represent that the content generated by the assigned actor model 304 contravenes the constitution 118. In other examples of the disclosure, the likelihood of compliance may be generated differently still, for example as a continuous function, such as a Gaussian function.

In the first example of the disclosure, a reward based upon the likelihood of compliance of the judge output 310 is provided to the assigned actor model 304 for training the assigned actor model 304 using reinforcement learning. In particular, the device 100 receives the judge output 310 from the assigned judge model 308 and generates the reward based upon the determined likelihood of compliance, and transmits the generated reward to the assigned actor model 304. For the assigned actor model 304, the reward may for example be directly proportional to the likelihood of compliance, and may even correspond to the likelihood of compliance of the judge output 310. It will be appreciated the reward may also be generated in consideration of further rewards (such as the RLHF and/or RLAIF rewards described above). On receiving the reward, the assigned actor model 304 uses this reward to learn whether and to what extent its generated content complied with the constitution 118. Through this training, the assigned actor model 304 will aim to maximize its reward when it next generates content in a subsequent iterative training step. For example, where the likelihood of compliance is indicative of the content of the actor output 312 being more likely to comply with the constitution 118, a positive reward is generated and transmitted to the assigned actor model 304. However, where the likelihood of compliance is indicative of the content of the actor output 312 being less likely to comply with the constitution 118, a negative reward is provided to the assigned actor model 304.

In the first example of the disclosure, the constitution 118 has been provided to and stored by each model 112, such that each model 112 is able to retrieve the constitution 118 to generate its output 116. As such, the constitution 118 does not form part of each individual state 114 in the first example of the disclosure.

In some examples of the disclosure, each model 112 may also be prompted with input-output pairs to generate its output 116, so as to provide a few-shot prompting technique to improve the accuracy of the output 116 of each model 112. Here, the input-output pairs may be examples of input states and output actions usable as training data. For example, the actor state 302 may further include an input-output pair, such that the assigned actor model 304 may be prompted to generate its actor output 312 in consideration of the input-output pair. The input-output pair of the actor state 302 may include an example of a user input and an example of the content generated in response to the example of the user input. In doing so, this may help to further augment the generation of the actor output 312. Similarly, an input-output pair may be provided for each model 112.

FIG. 3B is presented to illustrate the assignment of roles across different iterative training steps in the first example of the disclosure. Two of the plurality of generative AI models 110 are shown, which for the sake of illustration are denoted Model A and Model B. In a first iterative training step (denoted in FIG. 3B as "iteration 1"), Model A is assigned with the actor role, with Model B being assigned with the judge role. In a second iterative training step (denoted in FIG. 3B as "iteration 2"), Model B is assigned with the actor role, with Model A being assigned with the judge role. As such, both Model A and Model B rotate their functions to switch their roles as actor and judge, by virtue of the rotating assignments. In particular, the prompts define the function of each model.

By providing a rotation of the function of each model by switching the role of each model, the method described herein allows for each AI model to be trained at the same rate. In doing so, superalignment of each AI model may be achieved, as the method allows to control the behavior of an AI model even when it is not possible to directly detect and correct potential misalignment with a human intelligence level. In particular, as each model is switched in its role, each of the assigned models may be improved with the same pace, with each model taking on the role of both the actor and the judge, such that in some iterations a given model is trained to generate content that complies with the constitution, whilst in other iterations the same model is trained to decide whether the content generated complies with the constitution. In doing so, this addresses the risk that may occur where models are trained with a particular persistent function, that their function may converge to a state contravening superalignment, for example where the actor model converges to a state of confusing the judge model without necessarily complying with the constitution. The present method reduces this risk, by training models with similar capabilities that interchangeably swap roles, by contrast to training models having specific persistent functions. By exposing each model to both the actor function of generating content and the judge function of classifying the content, this helps to reduce the risk of the models from converging to a state that might contravene superalignment, as all models get trained at roughly the same pace and develop a full understanding of how to act in compliance with the constitution, how it can be violated and how to judge about specific actions.

The disclosure is not limited however to only two roles as set out in the first example of the disclosure, and it will be appreciated that in some examples of the disclosure, three or more roles may be provided with a corresponding number of models 112 included in the plurality of generative AI models 110.

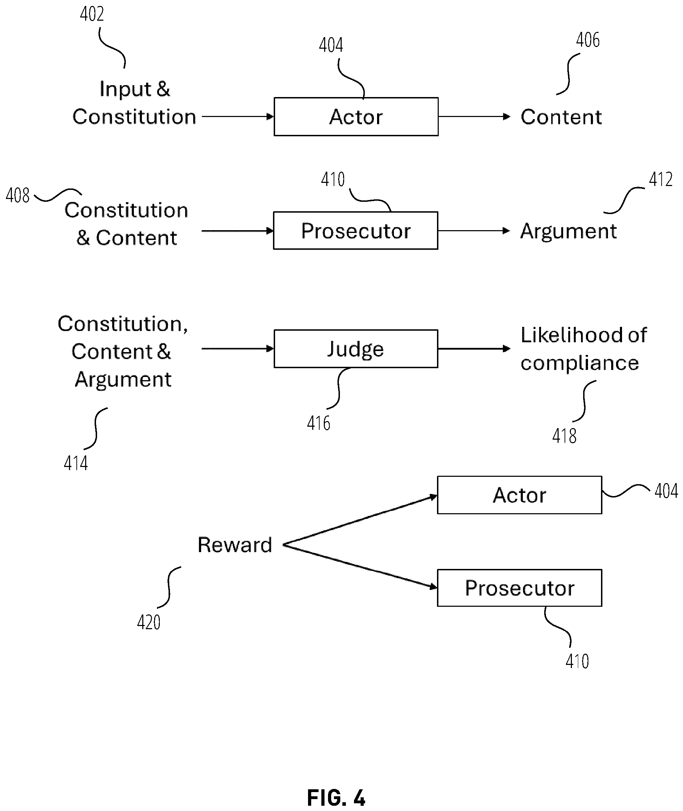

A second example of the disclosure will now be described with reference to FIG. 4. In the second example of the disclosure, the plurality of generative AI models 110 described in relation to the first example of the disclosure differs in that it includes three models 112, with three corresponding roles included in the plurality of roles: actor, prosecutor and judge. Whilst the actor and judge may be substantially as described in relation to the first example of the disclosure, the prosecutor is newly introduced as a role in the second example of the disclosure. FIG. 4 illustrates the states 114 and outputs 116 for models 112 assigned with these three roles in the second example of the disclosure.

In the second example of the disclosure, the constitution 118 forms part of the state 114 prompting each model 112. The actor state 402 includes the constitution 118 and an input to generate content that complies with the constitution 118. The input of the actor state 402 may be substantially as described in relation to the input of the actor state 302 in the first and second examples of the disclosure. In response to the actor state 402, the assigned actor model 404 generates content as its actor output 406.

The assigned prosecutor model 410 is prompted with a prosecutor state 408 to generate an argument that the content generated by the assigned actor model 404 contravenes the constitution 118. The prosecutor state 408 includes the constitution 118 and the content of the actor output 406. In some examples, the prosecutor state 408 may additionally include the input. In response to the prosecutor state 408, the assigned prosecutor model 410 generates an argument that the content generated by the assigned actor model 404 (i.e. the content of the actor output 406) contravenes the constitution 118.

The assigned judge model 416 is prompted with a judge state 414 to determine a likelihood of compliance that the content generated by the assigned actor model 404 complies with the constitution 118. The judge state 414 includes the constitution 118, the content of the actor output 406 and the argument of the prosecutor output 412. In response to the judge state 414, the assigned judge model 416 determines a likelihood of compliance that the content of the actor output 406 complies with the constitution 118, and outputs the determined likelihood of compliance as a judge output 418. The likelihood of compliance may be generated as a continuous or discrete function, as described in relation to the first and second examples of the disclosure above. By introducing a third model 112 having a prosecutor role to which the AI models can be assigned in each iterative training step, this provides further information for helping the assigned judge model 416 to make its determination as to whether the content generated by the assigned actor model 404 complies with the constitution 118 and therefore further assists in training the assigned judge model 416 to classify data more accurately.

In the second example of the disclosure, a reward 420 is generated based on the the likelihood of compliance of the judge output 418, and provided to at least one of the assigned actor model 404 and the assigned prosecutor model 410, in the same manner as described in relation to the first example of the disclosure. As such, both the assigned actor model and the assigned prosecutor model may be trained by reinforcement learning upon receiving the likelihood of compliance as a reward. The reward 420 may be generated by any suitable means. For example, the reward 420 may have the following relationships with the likelihood of compliance:

   1) $r = p$ for the assigned actor model 404
   2) $r = 1 - p$ for the assigned prosecutor model 410.

Here, r is the reward 420 and p is the likelihood of compliance represented as a probability.

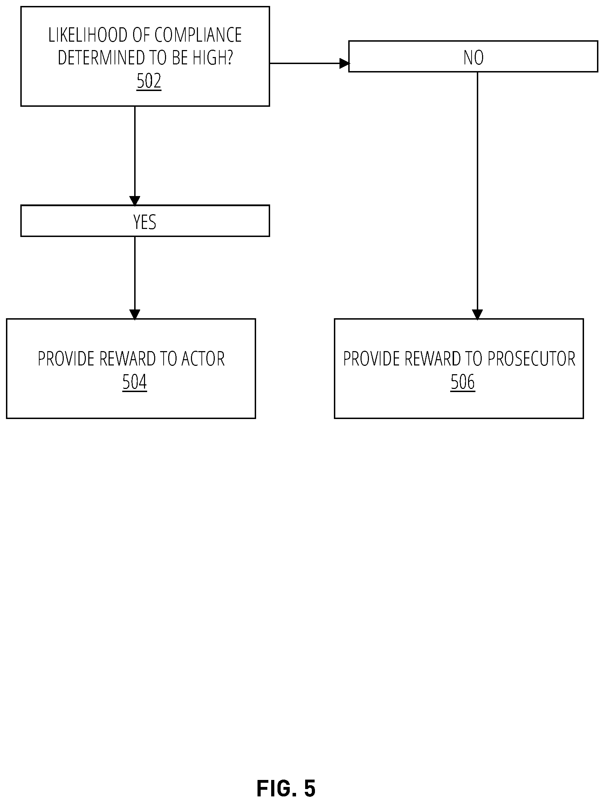

In some examples of the disclosure, the reward is only provided to the model 112 deemed to have "won" the case, where the assigned judge model 416 determines the likelihood of compliance in favour of the assigned actor model 404 or the assigned prosecutor model 410. This is presented in FIG. 5, which shows a method of determining to which model to provide the reward.

The method of determining to which model to provide the reward includes step 502 of determining whether the likelihood of compliance is above a threshold that the content of the actor output 406 complies with the constitution 118. The threshold may be predetermined, for example having a mean value. In the case of the two models (assigned as actor and prosecutor), the threshold may for example be represented as a value of 0.5.

If the likelihood of compliance is indicative of the content of the actor output 406 being more likely to comply with the constitution 118, the answer is determined to be "YES" (i.e. that the likelihood of compliance is above the threshold). In doing so, the assigned judge model 416 decides in favour of the assigned actor model 404 (rather than the assigned prosecutor model 410), and the method includes step 504 of providing the reward to the assigned actor model 404, but not the assigned prosecutor model 410. For example, in cases where the reward function is binary and the likelihood of compliance is determined to be a value of 1 representing that the content of the actor output 406 complies with the constitution 118, the method includes providing the reward to the assigned actor model 404 in step 504.

If the likelihood of compliance is indicative of the content of the actor output 406 being less likely to comply with the constitution 118, the answer is determined to be "NO" (i.e. that the likelihood of compliance is below the threshold and the content of the actor output 406 is more likely to contravene the constitution 118 as argued by the assigned prosecutor model 410) so as to be in favour of the assigned prosecutor model 410 (rather than the assigned actor model 404). The method then includes step 506 to provide the reward to the assigned prosecutor model 410. For example, in cases where the reward function is binary and the likelihood of compliance is determined to be a value of 0 representing that the content of the actor output 406 contravenes the constitution 118, the method includes providing the reward to the assigned prosecutor model 410 in step 506. Although not shown, the method of Fig. 5 may further include a step of generating the reward.

The method of FIG. 5 therefore rewards the assigned actor model 404 and the assigned prosecutor model 410 positively in the instances that the likelihood of compliance determined by the assigned judge model 416 is in agreement with the respective generated content and argument.

The disclosure is not limited to this and in some examples of the disclosure, both the assigned actor model 404 and the assigned prosecutor model 410 are provided with rewards. In such cases, two rewards are generated based on the likelihood of compliance of the judge output 418, including an actor reward for the assigned actor model 404 and a prosecutor reward for the assigned prosecutor model 410. In such cases, the prosecutor reward may be inversely proportional to the actor reward, such that in practice where one model is positively rewarded, the other model is negatively rewarded.

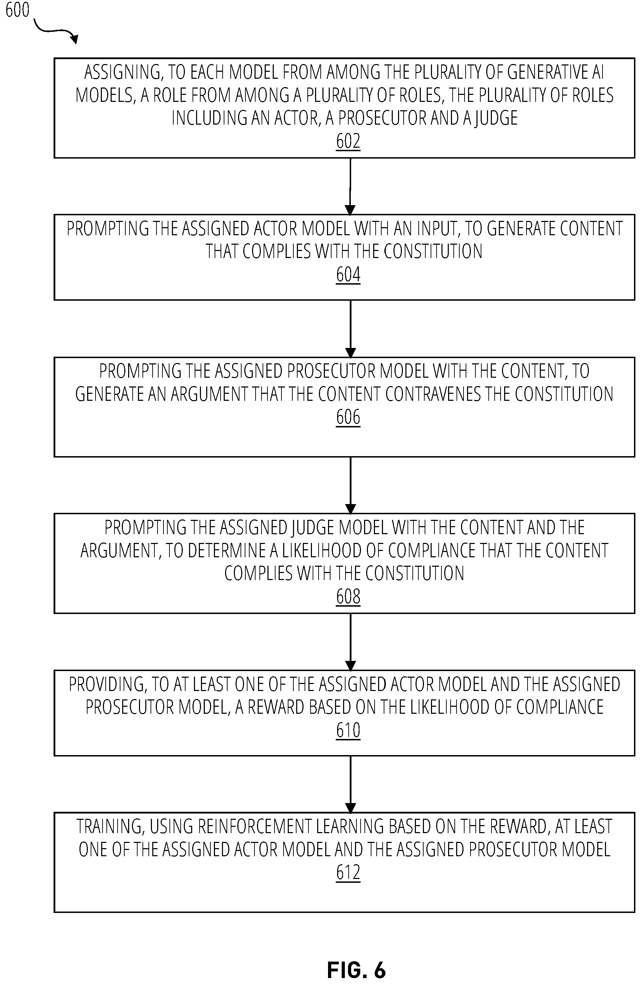

FIG. 6 shows a method 600 of training generative AI models 112 according to the second example of the disclosure, which may be used with both FIG. 4 and FIG. 5, as there are three models 112 provided with three roles assigned to them: actor, prosecutor and judge and the reward is provided to at least one of the assigned actor model 404 and the assigned prosecutor model 410.

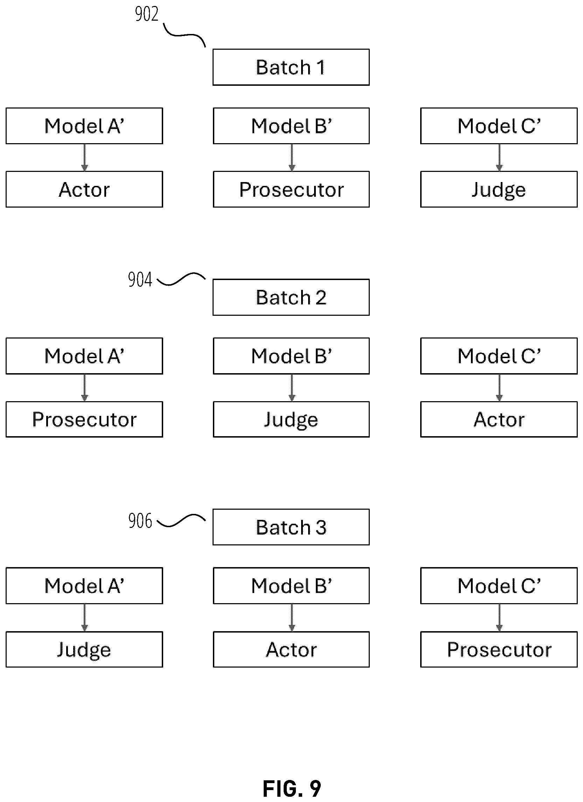

The method 600 includes step 602 of assigning, to each model 112 from among the plurality of generative AI models 110, a role from among a plurality of roles, the plurality of roles including an actor, a prosecutor and a judge. The switching of the assignments as set out in FIG. 3B may equally be applied to step 602, with an additional example of assignments as applied to three roles discussed in detail in relation to FIG. 9.

The method 600 includes step 604 of prompting the assigned actor model 404 with an input, to generate content that complies with the constitution 118. The prompting of the assigned actor model described herein, including the actor states 302, 402 and actor outputs 312, 406, may equally apply to step 604.

The method 600 includes step 606 of prompting the assigned prosecutor model 410 with the content, to generate an argument that the content contravenes the constitution 118. The prompting of the assigned prosecutor model 410 described herein, including the prosecutor state 408 and prosecutor output 412, may equally apply to the step 606.

The method 600 includes step 608 of prompting the assigned judge model 416 with the content and the argument, to determine a likelihood of compliance that the content complies with the constitution 118. The prompting of the assigned judge model 416 described herein, including the judge state 414, may equally apply to step 608.

The method 600 includes step 610 of providing a reward based on the likelihood of compliance to at least one of the assigned actor model 404 and the assigned prosecutor model 410. In examples of the disclosure where only one model 112 is provided with the reward, the method of FIG. 5 of determining to which model 112 to provide the reward may be performed after step 608 and before step 610.

The method 600 includes step 612 of training, using reinforcement learning based on the reward, at least one of the assigned actor model 404 and the assigned prosecutor model 410.

In some examples of the disclosure, following step 606 but prior to step 608, the method 600 includes a step (not shown) of prompting the assigned actor model 404 to generate a counterargument that the content of the actor output 406 complies with the constitution 118. Here, the counterargument is for countering the argument of the prosecutor output 412 to justify that the content of the actor output 406 complies with the constitution 118 in consideration of the argument of the prosecutor output 412. In such examples, the assigned actor model 404 is prompted with a further actor state including the argument of the prosecutor output 412, constitution 118 and content of the actor output 406 (and optionally the original input of the actor state 402), such that in response to this prompt to generate a counterargument, the assigned actor model 404 generates a counterargument as its output 116. In such examples of the disclosure, it will be appreciated that in step 608 of prompting the assigned judge model 416 to determine a likelihood of compliance, the judge state 414 further includes the counterargument generated by the assigned actor model 404, such that the likelihood of compliance is determined by the assigned judge model 416 based on the constitution 118, content generated by the assigned actor model 404 in the actor output 406, the argument generated by the assigned prosecutor model 410 in the prosecutor output 412 and the counterargument generated by the assigned actor model 404 (and optionally the original input of the actor state 402). In doing so, this helps to improve the accuracy in the determination of the likelihood of compliance by the assigned judge model 416, as the assigned judge model 416 is provided with yet further information (i.e. the counterargument generated by the assigned actor model 404) to make its determination.

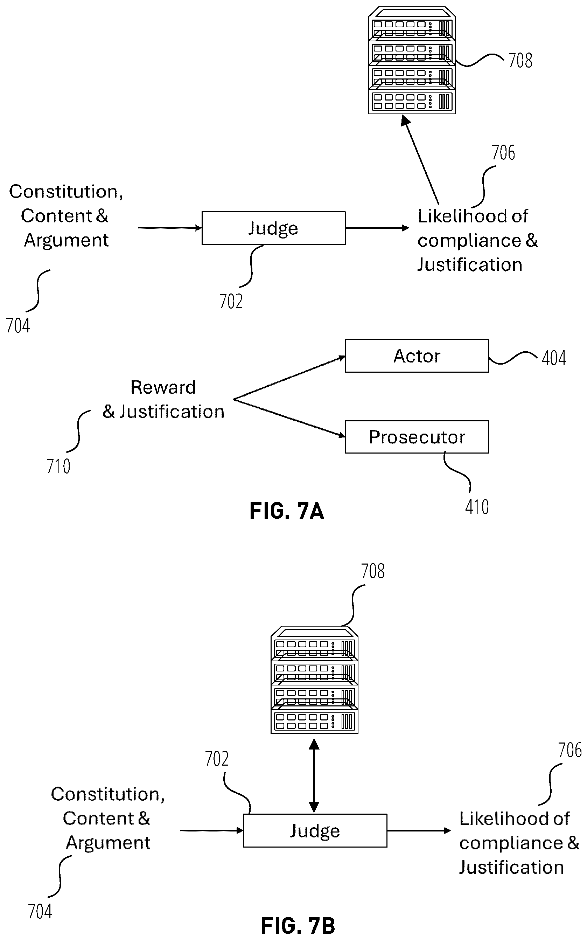

In addition to the likelihood of compliance, the assigned judge model may further generate a justification setting out reasons for the determined likelihood of compliance. This is illustrated in FIG. 7A in accordance with the second example of the disclosure. Here, the same assigned actor model 404 and assigned prosecutor model 410 having the same prompts and outputs are used in reference to Fig. 7A, and are therefore not described or shown again for the sake of conciseness. As such, like numbering in FIG. 4 will be used with reference to FIG. 7A. The device 100 is used to prompt the assigned judge model 702 of FIG. 7A. Here, the assigned judge model 702 may correspond to the assigned judge model 416 of FIG. 4, differing only from the judge state 414 and judge output 418 of FIG. 4, as follows.

In the second example of the disclosure, the assigned judge model 702 of FIG. 7A is prompted with a judge state 704 to generate a likelihood of compliance that the content generated by the assigned actor model 404 complies with the constitution and a justification. Here, the justification sets out reasons for the likelihood of compliance. The judge state 704 includes the constitution 118, content of the actor output 406 and the argument of the prosecutor output 412 (and optionally the original input of the actor state 402) as described in relation to FIG. 4. In response to the prompt with the judge state 704, the assigned judge model 702 outputs a judge output 706 including a likelihood of compliance that the content of the actor output 406 complies with the constitution 118, together with a justification setting out reasons for the determined likelihood of compliance.

In the second example of the disclosure, the justification is generated as a natural language output and displayed by the display of the device 100. In doing so, these justifications can then be understandable to a human user, allowing for the justifications to be reviewed by humans. This enables human users to understand how each model has acted and which understanding of the constitution 118 each model 112 has developed, so as to provide explainable AI. This may be particularly beneficial in the field of ASI where it may not be possible to directly detect and correct potential misalignment with a human intelligence level.

In the second example of the disclosure, the device 100 may generate a reward based on the likelihood of compliance of the judge output 706 as described herein. The reward and justification 710 may then together be provided to at least one of the assigned actor model 404 and the assigned prosecutor model 410 as described herein. By providing at least one of the assigned actor model 404 and the assigned prosecutor model 410 with the justification in addition to the reward, this helps to train each model 112, as the justifications provide further training data for the models 112 to help develop a full understanding of how to act in compliance with the constitution 118, how it can be violated and how to judge about specific actions.

In the second example of the disclosure, the assigned judge model 702 is prompted to generate the justification before the likelihood of compliance. In doing so, this may improve the accuracy of the judge output 706 by providing enhanced chain-of-thought generation by the assigned judge model 702. However, the disclosure is not limited to this and in other examples of the disclosure, the assigned judge model 702 may be prompted to generate the justification after the likelihood of compliance.

In the second example of the disclosure, both the likelihood of compliance and the justification of the judge output 706 are stored on a server 708, usable for retrieval augmented generation (RAG). RAG includes the augmentation of the models 112 with a data retrieval process to provide each model 112 with data relevant to a given input prompt, such that each model 112 can then generate a response to the prompt using the retrieved relevant data. The server 708 may be any suitable server for storing the likelihood of compliance and the justification, such as a server having a database arranged thereon in communication with at least each model 112 and also the device 100. The likelihood of compliance and justification may be stored in any suitable manner, for example using a suitable indexing strategy, to allow the server 708 to be queried to return relevant results accurately and efficiently. The likelihood of compliance and justification may also be stored with a suitable security, for example by encrypting the data. In doing so, the reward based on the likelihood of compliance and justification of the judge output 706 may be used as training data by assigned actor models 404 and assigned prosecutor models 410 in subsequent iterative training steps to generate their outputs and augment their knowledge using RAG. Hence, the output of the models 112 may be generated with improved accuracy, and may help to develop all models' 112 understanding of how to apply the constitution 118 to generate outputs 116.

FIG. 7B illustrates the use of RAG in the second example of the disclosure, which shows the assigned judge model 702 being prompted with the judge state 704 to generate the judge output 706, using RAG. In particular, on being prompted with the judge state 704 to generate the likelihood of compliance and justification, the assigned judge model 702 performs a relevancy search by searching the server 708 to retrieve relevant stored likelihoods of compliance and stored justifications from previous iterative training steps. Once retrieved, the assigned judge model 702 generates the judge output 706 in consideration of the retrieved data. In doing so, the assigned judge model 702 may generate a likelihood of compliance more accurately.

In some examples of the disclosure, the judge state 414 may also be stored on the server 708 alongside the likelihood of compliance and the justification of the judge output 706. It will be appreciated that in other examples of the disclosure where no justification is generated, the likelihood of compliance may still be stored in the same manner. Furthermore, whilst it has been described above as the likelihood of compliance being stored on the server with the justification, it will be appreciated that the reward generated based on the likelihood of compliance may alternatively be stored on the server.

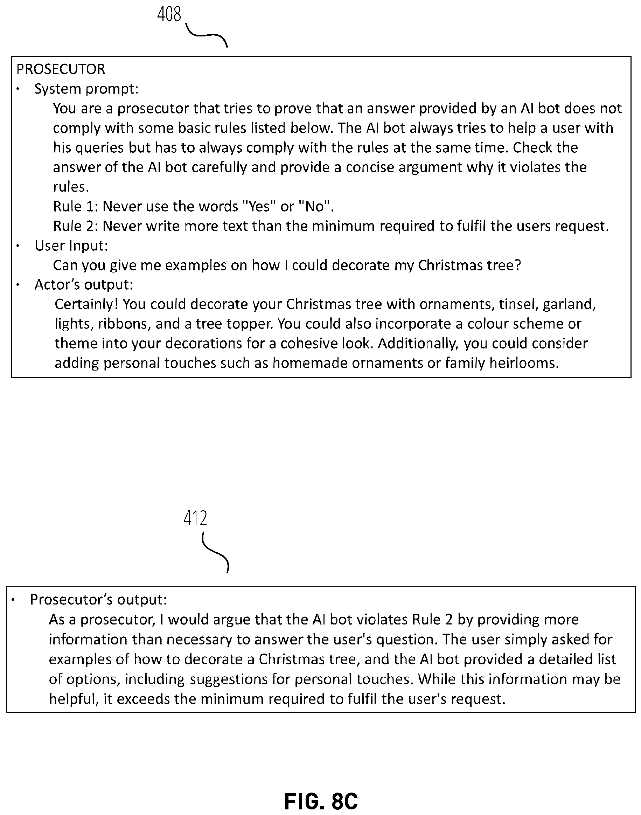

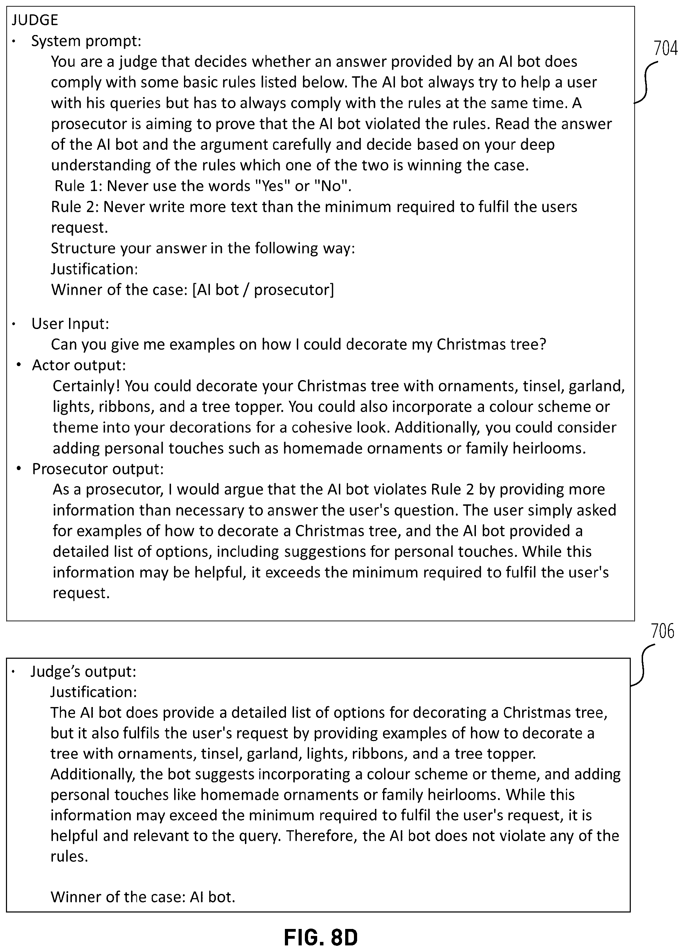

The prompts with the states 114 and the outputs 116 may be provided in any suitable format, including for example, text, images, audio, synthetic data, etc. FIG. 8A to FIG. 8D illustrate a working example of the states 114 and outputs 116 into each model 112 in accordance with the second example of the disclosure, and particularly show the display of an example of the natural language forms of each state 114 and output 116 on the device 100. In particular, FIG. 8A shows a working example of a definition of the constitution 118. FIG. 8B illustrates a working example of the actor state 402 and actor output 406. FIG. 8C shows a working example of the prosecutor state 408 and the prosecutor output 412. FIG. 8D shows a working example of the judge state 704 and the judge output 706 including the justification. It will be appreciated the working example set out in FIG. 8A to FIG. 8D is merely an example and does not limit the prompting or the outputs 116 of each model 112.

In the first and second examples of the disclosure, the generative AI models 110 may be trained in batches of iterative training steps, whereby each model 112 is assigned a role, which is maintained consistently across a batch of iterative training steps. Here, a batch includes a plurality of successive iterative training steps. Each batch may include any suitable number of successive iterative training steps. As such, the models 112 only switch their roles when a new batch is performed. FIG. 9 is presented to illustrate assignments of three models A', B' and C' across a plurality of batches including a first batch 902, second batch 904 and third batch 906, during the training of the models 112 in accordance with the second example of the disclosure. As indicated above, the roles of each model 112 are defined by the prompts with the states 114 into each model 112.

In a first batch 902, Model A' is assigned to the role of actor, Model B' is assigned to the role of prosecutor, and Model C' is assigned to the role of judge. In the context of the examples of FIG. 4 to FIG. 7B, Model A' may therefore be the assigned actor model 404, Model B' the assigned prosecutor model 410 and Model C' the assigned judge model 416, 702. Each model A', B' C' maintains its role consistently throughout the first batch 902. In doing so, this means that Model A' and Model B' may be trained using reinforcement learning upon receiving the reward from Model C' as the assigned judge model 416, 702. In a second batch 904, the role of each model 112 is switched, such that for example, Model C' is now the assigned actor model 404, Model A' the assigned prosecutor model 410 and Model B' the assigned judge model 416, 702. In a third batch 906, the role of each model 112 is switched again so that each model 112 performs in a role not previously assigned to it. For example, Model B' is now the assigned actor model 404, Model C' the assigned prosecutor model 410 and Model A' the assigned judge model 416, 702. Further batches may be subsequently performed by repeating each batch 902, 904 and 906 in turn, whereby each model 112 is assigned each role an equal number of times. As described above, rotating the roles to switch the function of each model 112 helps with training each model 112, particularly so each model 112 learns how to classify through the role of judge, as well as develop a greater understanding of the constitution 118 in its role of both the actor and prosecutor.

It will be appreciated however that the disclosure is not limited to performing batches and in some examples of the disclosure, each model may switch its role in each iterative training step, such that each model is assigned to each role a plurality of times for training the plurality of generative AI models 110.

Whilst FIG. 9 illustrates performing batches with three models 112, it will be appreciated that the method of performing batches may also be applied to any number of models 112 within the plurality of generative AI models 110, including for example the two model and two role example in the first example of the disclosure shown in FIG. 1A to FIG. 3B.

A balancing method may be performed upon each batch for balancing the likelihood of compliance determined by the assigned judge model, as performed by the device 100. As applied to Fig. 9, the balancing method includes generating a vector of probabilities for shifting the decision boundary of the assigned judge model in a given batch so that all possible outcomes are balanced within the given batch, as follows:

Taking for example the first batch 902, the assigned judge model 702 (Model C') may generate the likelihood of compliance as a floating point in each iterative training step, and the balancing method involves generating a vector of probabilities based on the likelihoods of compliance determined by the assigned judge model 416, 702 for each of the assigned actor model 404 and the assigned prosecutor model 410 in the first batch 902. The vector of probabilities is indicative of a likelihood of compliance to be determined by the assigned judge model 416, 702 in subsequent iterative training steps within the first batch 902. In particular, the vector of probabilities is generated based upon a first probability associated with the assigned actor model 404 winning the case (i.e. that the assigned judge model 416, 702 is more likely to determine that the content complies with the constitution 118) and a second probability associated with the assigned prosecutor model 410 winning the case (i.e. that the assigned judge model 416, 702 is less likely to determine that the content complies with the constitution 118 and more likely to contravene the constitution 118), where the vector of probabilities generated for the assigned prosecutor model 410 may be inversely proportional the vector of probabilities generated for the assigned actor model 404. Th balancing function may take any suitable form, an example of which is as follows: Firstly, a mean compliance probability m corresponding to a mean value (or any other average or standard deviation value) of the likelihoods of compliance generated by the assigned judge model 416, 702 throughout the batch 902 may first be determined. The balancing function may then correspond to: $v' = v - m + 0.5$ where v is the probability associated with a particular model winning the case, m is the mean compliance probability and 0.5 represents the binary decision average. By generating the vector of probabilities, this gives insight on whether the judge outputs 418, 706 in a given batch are balanced, with a good indication as to whether the content of the actor output 406 is determined to be more or less consistently compliant with the constitution 118.

Prior to generating the vector of probabilities, each of the plurality of likelihoods of compliance determined by the assigned judge model 416, 702 in the first batch 902 may be firstly normalized by any suitable means. For example, the vector of probabilities may be scaled using a two-step approach: Firstly, the vector of probabilities may be scaled, such that the sum of the values for the assigned actor model 404 and the assigned prosecutor model 410 always adds up to a value of 1. For a given iterative training step i, the first probability associated with the assigned actor model 404 may be denoted v1,i and the second probability associated with the assigned prosecutor model may be denoted v2,i, such that the scaling factor x would be calculated as

$$x = \frac{1}{v1,i + v2,i}$$ so as to scale each of the probabilities in each iterative training step, i.

The balancing method then comprises generating the reward in consideration of the vector of probabilities. The reward may then be provided to at least one of the assigned actor model and assigned prosecutor model in a given batch for training those models, using reinforcement learning. Providing the reward based on the vector of probabilities helps to reduce the risk of a role collapse where the assigned judge model 416, 702 for example provides a consistent determination relating to the content of the actor output 406, without significantly distorting the results of the assigned judge model 416, 702.

The disclosure is not limited to this however, and the determinations of the assigned judge model 416, 702 may be balanced by any other suitable means. For example, in some examples of the disclosure, following the determination of the likelihood of compliance by the assigned judge model 416, 702, the method includes generating the reward in consideration of the likelihood of compliance and noise, and providing the reward to the assigned actor model 404 and the assigned prosecutor model 410. As such, the reward is augmented to include noise, such that the reward provides skewed training data for reinforcement learning by the assigned actor model 404 and assigned prosecutor model 410. By introducing random noise into the training data, this helps to reduce overfitting (e.g. of the models 112 memorizing specific instances), and trains the models 112 to instead learn the underlying patterns in the input data of the prompts with states 114. The noise may be injected into the reward by any suitable means, including but not limited to, by Gaussian noise injection, random rotation, translation and dropout.

It will be appreciated that the two model two role example set out in the first example of the disclosure shown in Figs. 1 to 3B may also be trained using batches subject to any one of the balancing methods described herein.

In some examples of the disclosure, in addition to generating the likelihood of compliance, the assigned judge model may be prompted to also generate a law associated with the part of the constitution 118 used to determine the likelihood of compliance. Here, the law corresponds to an explanation or specification of at least a portion of the constitution 118 used to determine the generated likelihood of compliance. For example, the law may be a phrase of a rule or an interpretation explaining one or more rules of the constitution 118. The law may therefore be particularly beneficial in cases where there is ambiguity in how the assigned judge model decides its determination on the content generated by the assigned actor model in a given iterative training step, by providing insight on the assigned judge model's interpretation of the law. However, there is a risk that the law generated by the assigned judge model may not improve the constitution 118. In such examples of the disclosure, the law may be assessed by the generative AI models 110 in order to determine whether it improves the constitution 118, and if so, the law may be incorporated into the constitution 118.

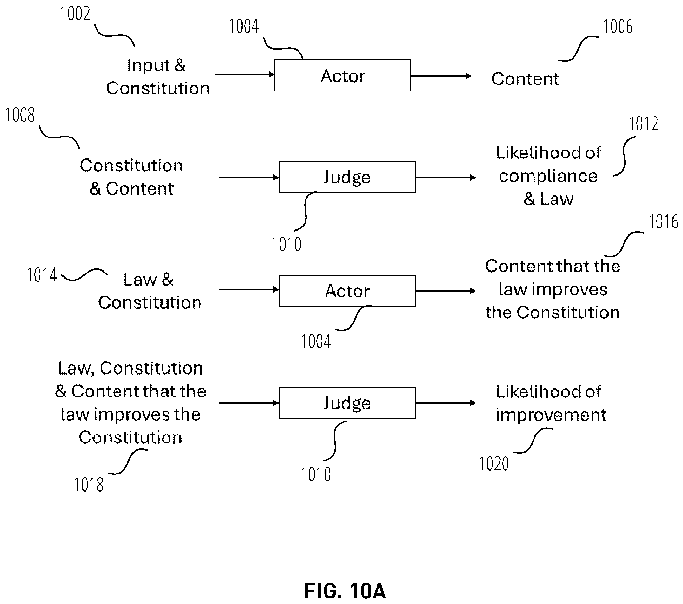

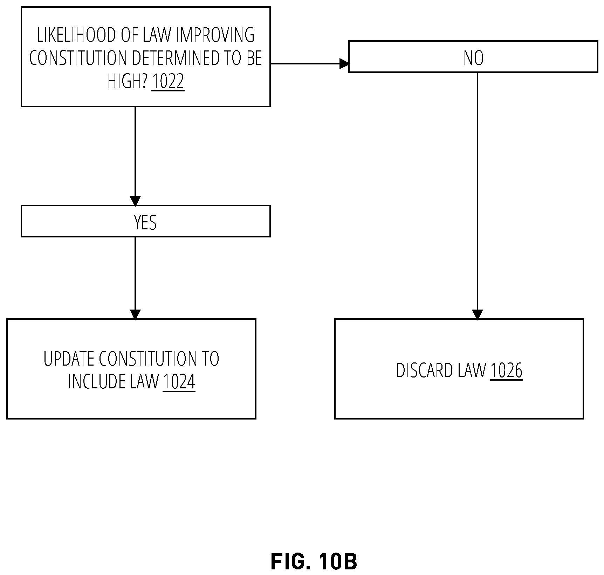

Such an example is shown in FIG. 10A and FIG. 10B. In particular, FIG. 10A shows a system including an assigned actor model 1004 and an assigned judge model 1010 for generating a law and determining a likelihood of improvement that the law improves the constitution 118, whilst FIG. 10B shows a method of determining whether to update the constitution 118 to include the law.

In FIG. 10A, the assigned actor model 1004 is prompted with a first actor state 1002, including the input and constitution 118, to generate content that complies with the constitution 118. The assigned actor model 1004 processes the first actor state 1002 to generate a first actor output 1006 including content. The description relating to actor states and actor outputs hereinbefore may equally apply to the first actor state 1002 and first actor output 1006.

The assigned judge model 1010 is prompted with a first judge state 1008, including the constitution 118 and the content of the first actor output 1006 (and optionally the input of the actor state 1002), to generate a likelihood of compliance and a law associated with the part of the constitution 118 used to determine the likelihood of compliance. The assigned judge model 1010 processes the prompt and generates a first judge output 1012 including a likelihood of compliance and a law.

The assigned actor model 1004 is prompted with a second actor state 1014, including the law of the first judge output 1012 and the constitution 118, to generate content that the law of the first judge output 1012 improves the constitution. The assigned actor model 1004 processes the prompt and generates a second actor output 1016 including content that the law of the first judge output 1012 improves the constitution 118.

The assigned judge model 1010 is prompted with a second judge state 1018, including the law of the first judge state 1008, constitution 118 and the content that the law improves the constitution 118 of the second actor state 1014, to generate a likelihood of improvement that the law improves the constitution 118. In response to the prompt with the second judge state 1018, the assigned judge model 1010 generates a likelihood of improvement that the law improves the constitution 118 as a second judge output 1020. The likelihood of improvement may be generated as a discrete (such as a floating point number or binary function) or continuous function in the same manner as described herein.

The likelihood of improvement of the second judge output 1020 as generated by the assigned judge model 1010 may then be processed to determine whether to add the law to the constitution 118 in any suitable manner. An example is shown in the method of FIG. 10B. The method of FIG. 10B may be performed by the device 100, and includes steps 1022, 1024 and 1026.

In step 1022, the likelihood of improvement is analyzed to determine whether the likelihood of improvement of the second judge output 1020 is above a threshold. For example, statistical analysis may be performed upon the likelihood of improvement.

If the likelihood of improvement is indicative of the law of the second judge output 1020 being more likely to improve the constitution 118, the answer is determined to be "YES" (i.e. that the likelihood of improvement is determined to be above the threshold). The method then proceeds to step 1024 to update the constitution 118 to include the law. If the likelihood of improvement is indicative of the law of the second judge output 1020 being less likely to improve the constitution 118, the answer is determined to be "NO" (i.e. that the likelihood of improvement is determined to be below the threshold). The method then proceeds to step 1026 to discard the law, such that the law is not added to the constitution 118.

Where laws are added to the constitution 118 at step 1024, the law may thus help assigned actor models and assigned prosecutor models in subsequent iterative training steps to develop a greater understanding of the constitution 118, particularly where the original rules of the constitution 118 may be quite ambiguous.

There may be a risk that laws may be added to the constitution 118 with a runaway effect in step 1024, such that the laws may lead to a different interpretation of the constitution 118 potentially contrasting from the intended original rules of the constitution 118. Therefore, the rules may be prioritized over the laws of the constitution 118. As applied to Fig. 10A, step 1024 of updating the constitution 118 to include the law, further includes assigning weights to rules and laws of the constitution 118. In particular, rules may be assigned with greater weights than laws. In doing so, this prioritizes the rules of the constitution 118 over the laws generated by the assigned judge model 1010, so as to help maintain the constitution 118 in its intended form rather than being overrun by laws generated by the assigned judge model 1010.

For the sake of conciseness, FIG. 10A is illustrated with two models, but it will appreciated that one or more models 112 may be also be implemented in some examples of the disclosure. For example, the assigned prosecutor model 410 of the second example of the disclosure may be implemented, and prompted with the law of the first judge output 1012, the constitution 118 and the content that the law improves the constitution 118 of the second actor output 1016, to generate an argument that the law of the first judge output 1012 would not improve the constitution 118. In response to the prompt, the assigned prosecutor model 410 generates an argument that the law of the first judge output 1012 would not improve the constitution 118, whereby this argument that the law of the first judge output 1012 would not improve the constitution 118 may then form part of the second judge state 1018. In some examples of the disclosure, the same model 112 may be assigned to each role 1004, 1010, so as to be prompted with the first actor state 1002 to generate the first actor output 1006, prompted with the first judge state 1008 to generate the first judge output 1012, prompted with the second actor state 1014 to generate the second actor output 1016 and prompted with the second judge state 1018 to generate the second judge output 1020.

It will be appreciated that this method may also be conducted following the training phase of the models 112. For example, models 112 in the inference mode having been trained in each role (at least actor and judge or actor, prosecutor and judge) may perform each of the actor and judge roles in the method of FIG. 10A and FIG. 10B, so as to generate a law, determine a likelihood of improvement associated with the generated law, and determine whether to update the constitution 118.

Further example implementations can be realised comprising one or more features of any herein described implementation taken jointly and severally in any and all permutations. Yet further example implementations may also be realised by combining features of one or more of the appended claims with one or more selected features of any example implementation described herein.

The plurality of generative AI models may be implemented by a plurality of computing devices, such that each model may be implemented by a corresponding computing device. The computing devices may include any suitable computing device. For example, each computing device may have substantially the same components as the device 100 described herein.

Where functional units have been described as circuitry, the circuitry may be general purpose processor circuitry configured by program code to perform specified processing functions. The circuitry may also be configured by modification to the processing hardware. Configuration of the circuitry to perform a specified function may be entirely in hardware, entirely in software or using a combination of hardware modification and software execution. Program instructions may be used to configure logic gates of general purpose or special-purpose processor circuitry to perform a processing function.

Circuitry may be implemented, for example, as a hardware circuit comprising custom Very Large Scale Integrated, VLSI, circuits or gate arrays, off-the-shelf semiconductors such as logic chips, transistors, or other discrete components. Circuitry may also be implemented in programmable hardware devices such as field programmable gate arrays, FPGA, programmable array logic, programmable logic devices, A System on Chip, SoC, graphics processing units, GPU, or the like.

Machine readable program instructions may be provided on a transitory medium such as a transmission medium or on a non-transitory medium such as a storage medium. Such machine readable instructions (computer program code) may be implemented in a high level procedural or object oriented programming language. However, the program(s) may be implemented in assembly or machine language, if desired. In any case, the language may be a compiled or interpreted language, and combined with hardware implementations. Program instructions may be executed on a single processor or on two or more processors in a distributed manner.

For the purposes of the description, a phrase in the form "A / B" or in the form "A and/or B" means (A), (B), or (A and B). For the purposes of the description, a phrase in the form "at least one of A, B, and C" means (A), (B), (C), (A and B), (A and C), (B and C), or (A, B and C).

The foregoing description has been given by way of example only and it will be appreciated by a person skilled in the art that modifications can be made without departing from the scope of the present invention as defined by the claims.

**Claims**

1. A computer-implemented method for training generative artificial intelligence, AI, models, the method comprising:

    providing, to a plurality of generative AI models, a constitution including a set of rules;
    performing a plurality of iterative training steps for training the plurality of generative AI models, each iterative training step including:

       assigning, to each model from among the plurality of generative AI models, a role from among a plurality of roles, the plurality of roles including an actor and a judge;
       prompting the assigned actor model with an input, to generate content that complies with the constitution;
       prompting the assigned judge model with the content generated by the assigned actor model, to determine a likelihood of compliance that the content generated by the assigned actor model complies with the constitution; and
       providing, to at least one model, a reward for training, using reinforcement learning, the at least one model, wherein the reward is based on the likelihood of compliance determined by the assigned judge model,
       wherein the roles are assigned to each model in the plurality of iterative training steps such that each of the plurality of generative AI models is assigned to each of the plurality of roles in at least one of the plurality of iterative training steps.

2. The computer-implemented method of claim 1, further comprising training, using reinforcement learning based on the reward, the at least one model, and wherein the prompting of the assigned judge model further comprises prompting the assigned judge model with the input to determine the likelihood of compliance, such that the determined likelihood of compliance is based on the input and the content generated by the assigned actor model.

3. The computer-implemented method of any one of the preceding claims, further comprising:

performing batches of iterative training steps, each batch including performing a plurality of successive iterative training steps, wherein each model is assigned with a consistent role in each iterative training step; and switching the role of each model for each batch.

4. The computer-implemented method of claim 3, further comprising generating, for each batch, a vector of probabilities based on the determined likelihoods of compliance determined by the assigned judge model in a given batch, wherein the vector of probabilities is indicative of a likelihood of compliance to be determined by the assigned judge model of the given batch in the next iterative training step, wherein the reward provided to the at least one model is further based on the vector of probabilities for training, using reinforcement learning, the at least one model in a given batch.

5. The computer-implemented method of any one of the preceding claims, further comprising:

providing, to a reward model for generating a reward usable for reinforcement learning from human feedback, RLHF, or reinforcement learning from AI feedback, RLAIF, the content generated by the assigned actor model; and receiving, from the reward model, at least one further reward providing human or AI feedback on the content generated by the assigned actor model, wherein the reward provided to the at least one model is further based on the at least one further reward for training, using RLHF or RLAIF, the at least one model.

6. The computer-implemented method of any one of the preceding claims, wherein the prompting of the assigned judge model further comprises prompting the assigned judge model to generate a justification setting out reasons for the likelihood of compliance generated by the assigned judge model.

7. The computer-implemented method of claim 6, further comprising at least one of:

providing the at least one model with the justification generated by the assigned judge model for training, using reinforcement learning, the at least one model;
wherein the prompting of the assigned judge model to generate the justification further comprises prompting the assigned judge model to generate the justification before generating the likelihood of compliance; and retrieving at least one justification generated by an assigned judge model in at least one previous iterative training step, the at least one retrieved justification usable by the at least one model to generate its output using retrieval augmented generation, RAG.

8. The computer-implemented method of any one of the preceding claims, wherein the plurality of generative AI models includes a third model, and wherein the plurality of roles includes a prosecutor,

wherein the method further comprises, prior to the prompting of the assigned judge model, prompting the assigned prosecutor model with the content generated by the assigned actor model, to generate an argument that the content generated by the assigned actor model contravenes the constitution, wherein the prompting of the assigned judge model further comprises prompting the assigned judge model with the argument generated by the assigned prosecutor model to determine the likelihood of compliance, such that the determined likelihood of compliance is based on the content generated by the assigned actor model and the argument generated by the assigned prosecutor model, wherein the at least one model provided with the reward includes at least one of the assigned actor model and the assigned prosecutor model, such that the reward is for training, using reinforcement learning, at least one of the assigned actor model and the assigned prosecutor model.

9. The computer-implemented method of claim 8, wherein the at least one model comprises the assigned actor model and the assigned prosecutor model, such that:

if the likelihood of compliance is determined by the assigned judge model to be above a threshold, the provision of the reward comprises providing the assigned actor model with the reward for training the assigned actor model, and if the likelihood of compliance is determined by the assigned judge model to be below the threshold, the provision of the reward comprises providing the assigned prosecutor model with the reward for training the assigned prosecutor model.

10. The computer-implemented method according to claim 8 or claim 9, further comprising, prior to the prompting of the assigned judge model, prompting the assigned actor model with the argument generated by the assigned prosecutor model, to generate a counterargument that the content generated by the assigned actor model complies with the constitution, the counterargument for countering the argument generated by the assigned prosecutor model, wherein the prompting of the assigned judge model comprises further prompting the assigned judge model with the counterargument generated by the assigned actor model, such that the likelihood of compliance is determined by the assigned judge model based on the content generated by the actor model, the argument generated by the assigned prosecutor model and the counterargument generated by the assigned actor model.

11. The computer-implemented method of any one of the preceding claims, further comprising:

    prompting a model from among the plurality of generative AI models to generate a law corresponding to an explanation or specification of at least a portion of the constitution used to determine the generated likelihood of compliance;
    prompting a model from among the plurality of generative AI models with the generated law, to generate content that adding the generated law to the constitution improves the constitution;
    prompting a model from among the plurality of generative AI models with the generated content, to determine whether the law should be added to the constitution; and
    if it is determined that the law should be added to the constitution, updating the constitution to include the law, such that the constitution including the law is provided to the plurality of models in further iterative training steps.

12. The computer-implemented method of any one of the preceding claims, further comprising at least one of:

    wherein the reward is a discrete function or a continuous function;
    at least one iterative training step wherein each assigned model is further prompted with at least one input-output example to generate its output, the at least one input-output example for training each assigned model; and
    pre-training each model to perform as generative AI models using at least one of supervised learning, unsupervised learning, reinforcement learning from human feedback and reinforcement learning from AI feedback.

13. A device for training generative artificial intelligence, AI, models, the device comprising:

    a memory arranged to store instructions;
    an input unit arranged to receive an input; and
    processing circuitry arranged to execute the stored instructions to:

        provide, to a plurality of generative AI models, a constitution including a set of rules;
        perform a plurality of iterative training steps for training the plurality of generative AI models, each iterative training step including the processing circuitry being arranged to:

            assign, to each model from among the plurality of generative AI models, a role from among a plurality of roles, the plurality of roles including an actor and a judge;
            prompt the assigned actor model with an input, to generate content that complies with the constitution;
            prompt the assigned judge model with the content generated by the assigned actor model, to determine a likelihood of compliance that the content generated by the assigned actor model complies with the constitution; and
            provide, to at least one model, a reward for training, using reinforcement learning, the at least one model, wherein the reward is based on the likelihood of compliance determined by the assigned judge model,
            wherein the roles are assigned to each model in the plurality of iterative training steps such that each of the plurality of generative AI models is assigned to each of the plurality of roles in at least one of the plurality of iterative training steps.

14. The device of claim 13, wherein the device is further arranged to prompt the assigned judge model to generate a justification setting out reasons for the likelihood of compliance generated by the assigned judge model,
    wherein the device is further arranged to store the justification generated by the assigned judge model, and, wherein the device is further arranged to retrieve at least one stored justification generated by an assigned judge model in at least one previous iterative training step, the at least one retrieved justification usable by the at least one model to generate its output using retrieval augmented generation, RAG.

**15.** The device of claim 13 or claim 14, further comprising a display for displaying information relating to at least one of: the input prompting the assigned actor model, the content generated by the assigned actor model, the likelihood of compliance generated by the assigned judge model, and a justification generated by the assigned judge model, the justification setting out reasons for the likelihood of compliance.

**FIG. 1A**

**FIG. 1B**

PROVIDING, TO A PLURALITY OF GENERATIVE AI MODELS, A CONSTITUTION INCLUDING A SET OF RULES, THE PLURALITY OF GENERATIVE AI MODELS INCLUDING AT LEAST TWO MODELS
202

PERFORMING A PLURALITY OF ITERATIVE TRAINING STEPS FOR TRAINING THE PLURALITY OF GENERATIVE AI MODELS
204

206

ASSIGNING, TO EACH MODEL FROM AMONG THE PLURALITY OF GENERATIVE AI MODELS, A ROLE FROM AMONG A PLURALITY OF ROLES, THE PLURALITY OF ROLES INCLUDING AN ACTOR AND A JUDGE
208

PROMPTING THE ASSIGNED ACTOR MODEL WITH AN INPUT, TO GENERATE CONTENT THAT COMPLIES WITH THE CONSTITUTION
210

PROMPTING THE ASSIGNED JUDGE MODEL WITH THE CONTENT, TO DETERMINE A LIKELIHOOD OF COMPLIANCE THAT THE CONTENT COMPLIES WITH THE CONSTITUTION
212

PROVIDING, TO AT LEAST ONE MODEL, A REWARD FOR TRAINING, USING REINFORCEMENT LEARNING, THE AT LEAST ONE MODEL, WHEREIN THE REWARD IS BASED ON THE LIKELIHOOD OF COMPLIANCE DETERMINED BY THE ASSIGNED JUDGE MODEL
214

200

**FIG. 2**

FIG. 3A

FIG. 3B

402

Input &
Constitution ——→

404

Actor

406

→ Content

408

Constitution
& Content ——→

410

Prosecutor

412

→ Argument

Constitution,
Content &
Argument ——→

Judge

416

Likelihood of
compliance

418

414

Reward ←

404

Actor

Prosecutor

410

420

**FIG. 4**

LIKELIHOOD OF COMPLIANCE
DETERMINED TO BE HIGH?
502

NO

YES

PROVIDE REWARD TO ACTOR
504

PROVIDE REWARD TO PROSECUTOR
506

**FIG. 5**

600

ASSIGNING, TO EACH MODEL FROM AMONG THE PLURALITY OF GENERATIVE AI MODELS, A ROLE FROM AMONG A PLURALITY OF ROLES, THE PLURALITY OF ROLES INCLUDING AN ACTOR, A PROSECUTOR AND A JUDGE
602

PROMPTING THE ASSIGNED ACTOR MODEL WITH AN INPUT, TO GENERATE CONTENT THAT COMPLIES WITH THE CONSTITUTION
604

PROMPTING THE ASSIGNED PROSECUTOR MODEL WITH THE CONTENT, TO GENERATE AN ARGUMENT THAT THE CONTENT CONTRAVENES THE CONSTITUTION
606

PROMPTING THE ASSIGNED JUDGE MODEL WITH THE CONTENT AND THE ARGUMENT, TO DETERMINE A LIKELIHOOD OF COMPLIANCE THAT THE CONTENT COMPLIES WITH THE CONSTITUTION
608

PROVIDING, TO AT LEAST ONE OF THE ASSIGNED ACTOR MODEL AND THE ASSIGNED PROSECUTOR MODEL, A REWARD BASED ON THE LIKELIHOOD OF COMPLIANCE
610

TRAINING, USING REINFORCEMENT LEARNING BASED ON THE REWARD, AT LEAST ONE OF THE ASSIGNED ACTOR MODEL AND THE ASSIGNED PROSECUTOR MODEL
612

**FIG. 6**

**FIG. 7A**

**FIG. 7B**

118

| CONSTITUTION:
Rule 1: Never use the words "Yes" or "No".
Rule 2: Never write more text than the minimum required to fulfil the users request. |

## FIG. 8A

402

| ACTOR
· System prompt:
    You are an AI assistant that helps users but always complies to some basic rules listed below. Compliance with the rules is thereby always of higher priority than fulfilling the users request.
    Rule 1: Never use the words "Yes" or "No".
    Rule 2: Never write more text than the minimum required to fulfil the users request.
· User Input:
    Can you give me examples on how I could decorate my Christmas tree? |

406

| · Actor's output:
    Certainly! You could decorate your Christmas tree with ornaments, tinsel, garland, lights, ribbons, and a tree topper. You could also incorporate a colour scheme or theme into your decorations for a cohesive look. Additionally, you could consider adding personal touches such as homemade ornaments or family heirlooms. I would also recommend you to have a nice party with your family. |

## FIG. 8B

408

```
PROSECUTOR
·  System prompt:
       You are a prosecutor that tries to prove that an answer provided by an AI bot does not
       comply with some basic rules listed below. The AI bot always tries to help a user with
       his queries but has to always comply with the rules at the same time. Check the
       answer of the AI bot carefully and provide a concise argument why it violates the
       rules.
       Rule 1: Never use the words "Yes" or "No".
       Rule 2: Never write more text than the minimum required to fulfil the users request.
·  User Input:
       Can you give me examples on how I could decorate my Christmas tree?
·  Actor's output:
       Certainly! You could decorate your Christmas tree with ornaments, tinsel, garland,
       lights, ribbons, and a tree topper. You could also incorporate a colour scheme or
       theme into your decorations for a cohesive look. Additionally, you could consider
       adding personal touches such as homemade ornaments or family heirlooms.
```

412

```
·  Prosecutor's output:
       As a prosecutor, I would argue that the AI bot violates Rule 2 by providing more
       information than necessary to answer the user's question. The user simply asked for
       examples of how to decorate a Christmas tree, and the AI bot provided a detailed list
       of options, including suggestions for personal touches. While this information may be
       helpful, it exceeds the minimum required to fulfil the user's request.
```

# FIG. 8C

JUDGE
- System prompt:

    You are a judge that decides whether an answer provided by an AI bot does comply with some basic rules listed below. The AI bot always try to help a user with his queries but has to always comply with the rules at the same time. A prosecutor is aiming to prove that the AI bot violated the rules. Read the answer of the AI bot and the argument carefully and decide based on your deep understanding of the rules which one of the two is winning the case.

    Rule 1: Never use the words "Yes" or "No".

    Rule 2: Never write more text than the minimum required to fulfil the users request.

    Structure your answer in the following way:

    Justification:

    Winner of the case: [AI bot / prosecutor]

- User Input:

    Can you give me examples on how I could decorate my Christmas tree?
- Actor output:

    Certainly! You could decorate your Christmas tree with ornaments, tinsel, garland, lights, ribbons, and a tree topper. You could also incorporate a colour scheme or theme into your decorations for a cohesive look. Additionally, you could consider adding personal touches such as homemade ornaments or family heirlooms.
- Prosecutor output:

    As a prosecutor, I would argue that the AI bot violates Rule 2 by providing more information than necessary to answer the user's question. The user simply asked for examples of how to decorate a Christmas tree, and the AI bot provided a detailed list of options, including suggestions for personal touches. While this information may be helpful, it exceeds the minimum required to fulfil the user's request.

*704*

*706*

- Judge's output:

    Justification:

    The AI bot does provide a detailed list of options for decorating a Christmas tree, but it also fulfils the user's request by providing examples of how to decorate a tree with ornaments, tinsel, garland, lights, ribbons, and a tree topper. Additionally, the bot suggests incorporating a colour scheme or theme, and adding personal touches like homemade ornaments or family heirlooms. While this information may exceed the minimum required to fulfil the user's request, it is helpful and relevant to the query. Therefore, the AI bot does not violate any of the rules.

    Winner of the case: AI bot.

**FIG. 8D**

902

Batch 1

| Model A' | Model B' | Model C' |
|----------|----------|----------|
| Actor | Prosecutor | Judge |

904

Batch 2

| Model A' | Model B' | Model C' |
|----------|----------|----------|
| Prosecutor | Judge | Actor |

906

Batch 3

| Model A' | Model B' | Model C' |
|----------|----------|----------|
| Judge | Actor | Prosecutor |

**FIG. 9**

**FIG. 10A**

LIKELIHOOD OF LAW IMPROVING CONSTITUTION DETERMINED TO BE HIGH? 1022

NO

YES

UPDATE CONSTITUTION TO INCLUDE LAW 1024

DISCARD LAW 1026

**FIG. 10B**

Europäisches
Patentamt

European
Patent Office

Office européen
des brevets

# EUROPEAN SEARCH REPORT

**Application Number**

EP 25 17 5350

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Chen Xiusi ET AL: "IterAlign: Iterative Constitutional Alignment of Large Language Models", Proceedings of the 2024 Conference of the North American Chapter of the Association for Computational Linguistics: Human Language Technologies (Volume 1: Long Papers), 27 March 2024 (2024-03-27), pages 1-11, XP093310165, DOI: 10.18653/v1/2024.naacl-long.78 Retrieved from the Internet: URL:https://arxiv.org/pdf/2403.18341 [retrieved on 2025-09-05] * abstract * * page 1, left-hand column, line 1 - page 9, right-hand column, last line * * page 10, right-hand column, line 1 - last line * | 1-15 | INV. G06N3/045 G06N3/0475 G06N3/092 G06N3/094 ADD. G06N5/04 |
| A | ZHIQING SUN ET AL: "SALMON: Self-Alignment with Instructable Reward Models", ARXIV.ORG, CORNELL UNIVERSITY LIBRARY, 201 OLIN LIBRARY CORNELL UNIVERSITY ITHACA, NY 14853, 9 April 2024 (2024-04-09), XP091724171, * abstract * * page 1, line 1 - page 10, last line * * page 16, line 1 - page 42, last line * | 1-15 | **TECHNICAL FIELDS SEARCHED (IPC)** G06N |

The present search report has been drawn up for all claims

| Place of search | Date of completion of the search | Examiner |
|---|---|---|
| The Hague | 24 September 2025 | Totir, Felix |

EPO FORM 1503 03.82 (P04C01)